(19) **Europäisches Patentamt / European Patent Office / Office européen des brevets**

(11) **EP 2 177 479 A1**

(12) **EUROPEAN PATENT APPLICATION**
published in accordance with Art. 153(4) EPC

(43) Date of publication:
**21.04.2010 Bulletin 2010/16**

(21) Application number: **08827117.6**

(22) Date of filing: **06.08.2008**

(51) Int Cl.:
$C02F\ 1/44$ (2006.01)  $B01D\ 61/02$ (2006.01)
$B01D\ 61/16$ (2006.01)  $B01D\ 61/58$ (2006.01)
$C02F\ 1/28$ (2006.01)  $C02F\ 1/42$ (2006.01)
$C02F\ 1/52$ (2006.01)  $C02F\ 9/00$ (2006.01)

(86) International application number:
**PCT/JP2008/064137**

(87) International publication number:
**WO 2009/020157 (12.02.2009 Gazette 2009/07)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.08.2007 JP 2007205854**
**31.10.2007 JP 2007284111**
**31.10.2007 JP 2007284112**
**31.03.2008 JP 2008092395**
**31.03.2008 JP 2008092396**

(71) Applicant: **Kurita Water Industries Ltd.**
**Shinjuku-ku, Tokyo 160-8383 (JP)**

(72) Inventors:
• **TADA, Keijirou**
**Tokyo 160-8383 (JP)**
• **OSAWA, Masanobu**
**Tokyo 160-8383 (JP)**
• **SATO, Shigeru**
**Tokyo 160-8383 (JP)**
• **IKEDA, Hiroyuki**
**Tokyo 160-8383 (JP)**

(74) Representative: **Strehl Schübel-Hopf & Partner**
**Maximilianstrasse 54**
**80538 München (DE)**

(54) **MEMBRANE SEPARATION METHOD AND MEMBRANE SEPARATION DEVICE**

(57)    To provide a membrane separation method capable of attaining reduced adsorption of a membrane-fouling substance contained in treatment water onto the surface of a separation membrane during membrane separation of the treatment water, to thereby lead retarded deterioration in membrane separation performance, and a membrane separation apparatus for performing the method. In the membrane separation method, to treatment water, a particulate cationic polymer which swells in water but does not substantially dissolve therein is added, and the treatment water is subjected to membrane separation.

FIG. 1

**Description**

Technical Field

The present invention relates to a method for performing membrane separation (hereinafter referred to as a "membrane separation method") capable of attaining reduced adsorption of a membrane-fouling substance contained in water to be treated (hereinafter may be referred to as "treatment water") onto the surface of a separation membrane during membrane separation of the treatment water (e.g., industrial water, city water, well water, river water, lake water, or industrial wastewater), to lead to retarded deterioration in membrane separation performance, and to a membrane separation apparatus for performing the method.

Background Art

For producing pure water or the like, water such as industrial water, city water, well water, river water, lake water, or industrial wastewater is treated through membrane separation by means of a membrane such as a micro-filtration membrane (MF membrane), ultra-filtration membrane (UF membrane), or reverse osmosis membrane (RO membrane). Generally, treatment water such as industrial water, city water, or well water contains a membrane-fouling substance such as a humic acid-containing organic substance, a fulvic acid-containing organic substance, or a bio-metabolite such as sugar produced by algae, etc., or a synthetic chemical such as a surfactant. Therefore, when such treatment water is subjected to membrane separation, membrane-fouling substances are adsorbed on the surface of the employed membrane, leading to problematic deterioration in membrane separation performance.

One currently employed approach to prevent fouling of the membrane is membrane separation of treatment water from which a membrane-fouling substance has been removed. Specifically, treatment water is subjected to flocculation treatment; e.g., addition of an inorganic flocculant and a polymer flocculant (e.g., an anionic polymer flocculant) to the treatment water before performing membrane separation, to thereby coagulate membrane-fouling substances; the thus-treated water is subjected to solid-liquid separation through precipitation, dissolved-air flotation, etc.; and the obtained supernatant (i.e., membrane-fouling substance-removed water) is subjected to membrane separation. However, when a polymer flocculant is added to water, the polymer flocculant remaining in the water is adsorbed on the membrane disposed on the downstream side of the flocculation tank, to thereby foul the membrane, resulting in deterioration in membrane separation performance, which is another problem.

In order to solve such problems, the present applicant previously developed a flocculation separation method including adding an inorganic flocculant and a polymer flocculant to treatment water, again adding an inorganic flocculant after flocculation reaction and before solid-liquid separation, and subsequent solid-liquid separation, and filed a patent application (see Patent Document 1).

However, the method disclosed in patent Document 1 requires an additional step of adding an inorganic flocculant to the treatment water after addition of the inorganic flocculant and the polymer flocculant. Thus, there is demand for a simpler method.

Patent Document 1:
Japanese Patent Application Laid-Open (*kokai*) No. 1999-77062

Disclosure of the Invention

Problems to be Solved by the Invention

In view of the foregoing, an object of the present invention is to provide a membrane separation method capable of attaining reduced adsorption of a membrane-fouling substance contained in treatment water onto the surface of a separation membrane during membrane separation of the treatment water, to thereby lead to retarded deterioration in membrane separation performance. Another object is to provide a membrane separation apparatus for performing the method.

Means for Solving the problems

The present inventors have carried out extensive studies in order to attain the aforementioned object, and have found that the aforementioned object can be attained by adding, to treatment water, a particulate cationic polymer which swells in water but does not substantially dissolve therein, prior to membrane separation. The present invention has been accomplished on the basis of this finding.

Accordingly, the present invention provides a membrane separation method, characterized by comprising adding, to treatment water, a particulate cationic polymer which swells in water but does not substantially dissolve therein; performing adsorption treatment; and subjecting the treatment water which has undergone the adsorption treatment to membrane separation by means of a separation membrane.

In the adsorption treatment, an inorganic flocculant is preferably added to the treatment water.

The membrane separation may include at least a separation treatment by means of a micro-filtration membrane or an ultra-filtration membrane, and the particulate cationic polymer may be removed from the treatment water through the membrane separation after the adsorption treatment.

The membrane separation may include separation treatment by means of at least one stage of a reverse osmosis membrane.

After the adsorption treatment, the treatment water may be subjected to deionization, to thereby produce pure water.

The separation membrane may be washed with a washing liquid having a pH of 11 to 14 at an arbitrary frequency, and the washing with the washing liquid may be reverse washing (i.e., reverse-flow washing).

The amount of the particulate cationic polymer added to the treatment water may be controlled on the basis of the absorbance of the treatment water measured before the adsorption treatment.

The absorbance is preferably measured at at least one wavelength falling within a UV region of 200 to 400 nm and at at least one wavelength falling within a visible-light region of 500 to 700 nm.

The treatment water may be humus-containing water.

The membrane separation method may comprise a flocculating aid addition step of adding a flocculating aid to treatment water; a particulate polymer addition step of adding, to the treatment water which has undergone the flocculating aid addition step, a particulate cationic polymer which swells in water but does not substantially dissolve therein; a stirring step of stirring the treatment water which has undergone the particulate polymer addition step; and a membrane separation step of subjecting the treatment water which has undergone the stirring step to membrane separation by means of a separation membrane.

Before addition of the flocculating aid, the treatment water may have a turbidity of less than 5°.

The flocculating aid is preferably an inorganic flocculant.

Alternatively, the membrane separation method may comprise a particulate polymer addition step of adding to treatment water a particulate cationic polymer which swells in water but does not substantially dissolve therein; a stirring step of stirring for 10 seconds or shorter the treatment water which has undergone the particulate polymer addition step; and a membrane separation step of subjecting the treatment water which has undergone the stirring step to membrane separation by means of a separation membrane.

Before addition of the particulate cationic polymer which swells in water but does not substantially dissolve therein, the treatment water may have a turbidity of 0.1 to 30°, and the treatment water which has undergone the membrane separation may have a turbidity of 0.0 to 1.0°.

The stirring step is preferably performed at a GT value of 100,000 to 300,000.

Furthermore, the membrane separation method may include, before the particulate polymer addition step, an inorganic flocculant addition step of adding an inorganic flocculant to the treatment water.

In another aspect of the present invention, there is provided a membrane separation apparatus characterized by comprising a reaction tank, treatment-water-introduction means for introducing treatment water to the reaction tank; particulate-polymer-introduction means for introducing a particulate cationic polymer which swells in water but does not substantially dissolve therein to the treatment water in the reaction tank or on the upstream side of the reaction tank; discharge means for discharging the treatment water which has undergone the adsorption treatment in the reaction tank; and membrane separation means for subjecting the treatment water which has been discharged through the discharge means to membrane separation by means of a separation membrane.

The membrane separation apparatus may further include deionization means for deionizing treatment water disposed on the downstream side of the reaction tank, to thereby serve as a pure-water production apparatus, wherein the membrane separation means includes at least one stage of a reverse osmosis membrane.

The membrane separation apparatus may further include washing-liquid-introduction means for introducing a washing liquid having a pH of 11 to 14 to the membrane separation means.

The membrane separation apparatus may further include absorbance-measuring means for measuring the absorbance of the treatment water, the means being disposed on the upstream side of the particulate-polymer-introduction means, and amount control means for controlling the amount of the particulate polymer added to the treatment water on the basis of the absorbance measured by means of the absorbance-measuring means.

Effects of the Invention

Through addition, to treatment water, of a particulate cationic polymer which swells in water but does not substantially dissolve therein, membrane-fouling substances can be adsorbed by the particles of the polymer. Once membrane-fouling substances have been captured by the particulate cationic polymer which swells in water but does not substantially dissolve therein, a reduction can be realized in adsorption of membrane-fouling substances contained in the treated water onto the surface of the membrane during membrane separation, as compared with the case where a conventional polymer flocculant or inorganic flocculant is employed. Thus, deterioration in membrane separation performance can be suppressed. Furthermore, in the membrane separation of the treatment water in which membrane-fouling substances are adsorbed by the particulate cationic polymer which swells in water but does not substantially dissolve therein, washing of the separation membrane with a washing liquid having a pH of 11 to 14 can remove the membrane-fouling substances adsorbed on the separation membrane. Thus, deterioration in membrane separation performance can be further suppressed.

Through controlling the amount of the particulate cationic polymer which swells in water but does not substantially dissolve therein and which is added to treatment water on the basis of the measured absorbance of the treatment water, soluble organic substances can be effectively removed from the treatment water. Thus, soluble organic substances can be effectively removed from the treatment water without addition of a large amount of an inorganic flocculant, whereby the amount of sludge and fouling of the membrane can be controlled.

Through addition, to treatment water, of a particulate cationic polymer which swells in water but does not substantially dissolve therein after addition of a flocculating aid thereto, and subsequent membrane separation, water having a low turbidity can also be treated, whereby clear treated water can be obtained without fouling the water treatment system or membrane.

Furthermore, according to the present invention, suspended solid particles (hereinafter referred to simply as "suspended solid") and the like can be satisfactorily flocculated, even when the stirring time in flocculation is 10 seconds or shorter. Thus, clear treated water (e.g., water having low suspended solid level) can be obtained through membrane separation. When the stirring time is shortened, even in the case where a line mixer is employed as a stirrer, the installation space of the stirrer can be comparatively reduced. Thus, the dimensions of the membrane separation apparatus can be reduced. In addition, since membrane-fouling substances can be satisfactorily flocculated, deterioration in separation performance of the membrane can be suppressed, whereby clear treated water can be consistently produced.

Brief Description of the Drawings

[FIG. 1] A system diagram of a membrane separation apparatus according to Embodiment 1.
[FIG. 2] A system diagram of a membrane separation apparatus according to Embodiment 1.
[FIG. 3] A system diagram of a membrane treatment apparatus according to Embodiment 2.
[FIG. 4] A system diagram of an exemplary membrane separation apparatus employing the membrane separation method according to Embodiment 3.
[FIG. 5] A system diagram of an exemplary membrane separation apparatus employing the membrane separation method according to Embodiment 4.
[FIG. 6] A graph showing the relationship between GT and MFF in Embodiment 4.

Description of the Reference Numerals

1, 50 membrane separation apparatus, 10 reaction tank, 11 treatment-water-introduction means, 12 chemical agent tank, 13 chemical-agent-introduction means, 14 discharge means, 15 membrane separation means, 16 decarbonation means, 17 activated carbon treatment means, 18 reverse osmosis membrane separation means, 19 stirrer, 20 treated water tank, 21 alkaine liquid, 22 washing-liquid-introduction means, 23 pH measurement means, 30 to 33 valve, 101 membrane separation apparatus, 111 raw water tank, 112 reaction tank, 113 treatment-water-introduction means, 114 chemical agent tank, 115 chemical-agent-introduction means, 116 inorganic flocculant tank, 117 inorganic-flocculant-introduction means, 118 discharge means, 119 membrane separation means, 120 decarbonation means, 121 reverse osmosis membrane separation means, 122 stirrer, 131 absorbance measurement means, 132 addition amount control means, 201 membrane separation apparatus, 210 treatment-water-introduction means, 211 first flocculation tank, 212 second flocculation tank, 213 flocculation tank, 214 flocculating aid tank, 215 flocculating-aid-introduction means, 216 particulate swellable polymer tank, 217 particulate-swellable-polymer-introduction means, 218 discharge means, 219, 220 stirrer, 221 dissolved-air flotation means, 222 sand filtration means, 223 membrane separation means, 301 membrane separation apparatus, 311 raw water tank, 312 inorganic flocculant tank, 313 inorganic-flocculant-introduction means, 314 particulate swellable polymer tank, 315 particulate-swellable-polymer-introduction means, 316 line mixer, 321 sand filtration means, 322 membrane separation means

Best Modes for Carrying Out the Invention

Embodiments of the present invention will be described in detail.

Embodiment 1

The membrane separation method according to the present invention is characterized by comprising adding, to treatment water, a particulate cationic polymer which swells in water but does not substantially dissolve therein, and subjecting the treatment water to membrane separation.

The treatment water contains a substance which fouls the membrane employed in membrane separation (membrane-fouling substance) carried out on the downstream side, for example, a humic acid-containing organic substance, a fulvic acid-containing organic substance, a bio-metabolite such as sugar produced by algae, etc., or a synthetic chemical such as a surfactant. However, no particular limitation is imposed on the type of treatment water, and specific examples include industrial water, city water, well water, river water, lake water, and industrial wastewater (in particular, industrial wastewater which has been subjected to biological treatment). The term "humus" refers to a degraded substance which is formed through degradation of plant, etc. by the mediation of microorganisms. Humus contains humic acid and the like, and humus-containing water contains humus and/or soluble COD ingredients derived from humus, suspended substances, and coloring ingredients.

The cationic polymer which swells in water but does not substantially dissolve therein and which forms the particles of the polymer which are added the treatment water is a copolymer of a cationic monomer having a functional group such as a primary amine group, a secondary amine group, a tertiary amine group, a group of an acid-added salt thereof, or a quaternary ammonium group, and a cross-linking agent monomer for attaining substantially no water solubility. Specific examples of the cationic monomer include an acidic salt or quaternary ammonium salt of dimethylaminoethyl (meth)acrylate, an acidic salt or quaternary ammonium salt of dimethylaminopropyl (meth)acrylamide, and diallyldimethylammonium chloride. Examples of the cross-linking agent monomer include diviyl monomers such as methylenebis(acrylamide). Alternatively, a copolymer of the aforementioned cationic monomer and an anionic or nonionic monomer which can be co-polymerized therewith may also be employed. Specific examples of the anionic monomer to be co-polymerized include (meth)acrylic acid, 2-acrylamido-2-methylpropanesulfonic acid, and an alkali metal salt thereof. The amount of the anionic monomer must be small so that the formed copolymer maintains a cationic property. Examples of the nonionic monomer include (meth)acrylamide, N-isopropylacrylamide, N-methyl(N,N-dimethyl)acrylamide, acrylonitrile, styrene, and methyl or ethyl (meth)acrylates. These monomers may be used singly or in combination of two or more species. The amount of the cross-linking agent monomer such as a divinyl monomer is required to be 0.0001 to 0.1 mol% with respect to the total amount of the monomers. Through controlling the amount, the swellability and particle size (in water) of the particles of a cationic polymer which swells in water but does not substantially dissolve therein can be controlled. Examples of the commercial product of the particulate cationic polymer which swells in water but does not substantially dissolve therein include Accogel C (product of Mitsui Sytec Ltd.). Alternatively, an anion-exchange resin such as WA20 (product of Mitsubishi Chemical Co., Ltd.) may also be used as the particulate cationic polymer which swells in water but does not substantially dissolve therein. No particular limitation is imposed on the particle size of the particles of a cationic polymer which swells in water but does not substantially dissolve therein. However, the mean particle size in reverse-phase emulsion or dispersion (suspended); i.e., the mean particle size in a non-water-swelling state, is preferably 100 $\mu$m or less, more preferably, 0.1 to 10 $\mu$m. When the particle size decreases, the particles more effectively adsorb the membrane-fouling substance contained in the treated water. However, when the particle size is excessively small, solid-liquid separation is difficult to carry out.

No particular limitation is imposed on the method of adding to treatment water the aforementioned particulate cationic polymer which swells in water but does not substantially dissolve therein. For example, the particles as are, water dispersion thereof, or reverse-phase emulsion or dispersion (suspended) thereof may be added to treatment water. In any case, it is essential that the treatment water is subjected to adsorption treatment through addition of the particulate cationic polymer which swells in water but does not substantially dissolve therein to the treatment water; i.e., the treatment water comes into contact with the particles of a cationic polymer which swells in water but does not substantially dissolve therein, whereby the solid suspended in the treatment water is adsorbed by the particles.

Two or more particulate cationic polymers which swell but do not substantially dissolve in water may also be added to the treatment water. Notably, since the cationic polymer *per se* which forms the particles swells but does not substantially dissolve in water, particles of the cationic polymer which swells in water but does not substantially dissolve therein swell but do not substantially dissolve in water, differing from a conventional polymer flocculant. The expression "not substantially dissolve in water" refers to such a water-solubility that the cationic polymer particles can be present in water. Specifically, the solubility of the particles in water at 30°C is about 0.1 g/L or less. The amount of percent swelling of the particles in water is about 10 to about 200 times, as calculated by dividing particle size in water by particle size in a non-swelling state.

Next, a reverse-phase emulsion form of the particles of cationic polymer will be described in detail. However, the particles are not limited to the form. The polymer particle emulsion is not a particular emulsion, but a conventional reverse-phase (W/O) polymer emulsion.

The reverse-phase emulsion contains the aforementioned cationic polymer, water, a liquid hydrocarbon, and a surfactant. The compositional proportions (% by mass) are as follows: cationic polymer : water : liquid hydrocarbon : surfactant = 20 to 40 : 20 to 40 : 20 to 40 : 2 to 20. Preferably, the total amount of the cationic polymer and water is adjusted to 40 to 60 mass% with respect to the total amount of the cationic polymer, water, a liquid hydrocarbon, and a surfactant.

No particular limitation is imposed on the liquid hydrocarbon, and examples of the liquid hydrocarbon include aliphatic liquid hydrocarbons such as isoparaffine (e.g., isohexane), n-hexane, kerosine, and mineral oil.

Examples of the surfactant include C10 to C20 higher aliphatic alcohol polyoxyethylene ethers and C10 to C22 higher fatty acid polyoxyethylene esters, having an HLB (hydrophilic lipophilic balance) of 7 to 10. Examples of the ethers include alcohol (lauryl alcohol, cetyl alcohol, stearyl alcohol, oleyl alcohol, etc.) polyoxyethylene (EO addition (by mole) : = 3 to 10) ethers. Examples of the esters include fatty acid (lauric acid, palmitic acid, stearic acid, oleic acid, etc.) polyoxyethylene (EO addition (by mole) = 3 to 10) esters.

No particular limitation is imposed on the method of producing the reverse-phase emulsion. The emulsion may be produced through mixing a cationic monomer (for forming the cationic polymer) and a cross-linking agent monomer with water, a liquid hydrocarbon, and a surfactant, and allowing the mixture to polymerize (via emulsion polymerization or suspension polymerization). In an alternative method, the monomers are solution-polymerized; the produced polymer is pulverized by means of a homogenizer or the like; and the polymer and a dispersant (e.g., surfactant) are added to a liquid hydrocarbon.

When the particulate cationic polymer which swells in water but does not substantially dissolve therein is added to treatment water, the particles preferably have a large surface area. Therefore, in a preferred manner, the particles in the form of reverse-phase emulsion or dispersion (suspended) are added to water under stirring, to thereby cause the particles to swell, and then the particles in the swelling state are added to the treatment water.

No particular limitation is imposed on the amount of the particulate cationic polymer which swells in water but does not substantially dissolve therein and which is added to treatment water. However, preferably, the amount is adjusted to about 1 to about 50 mass% with respect to the membrane-fouling substance contained in the treatment water. No particular limitation is imposed on the pH of the treatment water to which the particulate cationic polymer which swells in water but does not substantially dissolve therein has been added. A lower pH, for example, about 5.0 to about 7.5, is preferred, since considerably excellent flocculation performance can be attained.

As described above, the adsorption treatment is performed by adding to treatment water a particulate cationic polymer which swells in water but does not substantially dissolve therein, and the thus-treated water is subjected to membrane separation.

Examples of the membrane employed in the membrane separation include micro-filtration membrane (MF membrane), ultra-filtration membrane (UF membrane), nano-filtration membrane (NF membrane), and reverse osmosis membrane (RO membrane). A single type of these membranes may be used singly in a plurality of stages. Alternatively, a plurality of types of membranes may be combined. In one embodiment, treatment water is subjected to membrane separation by means of an MF membrane or UF membrane, and the thus-treated water is further subjected to membrane separation by means of an RO membrane.

Generally, the treatment water (e.g., industrial water, city water, well water, or biologically treated water) contains a membrane-fouling substance such as a humic acid-containing organic substance, a fulvic acid-containing organic substance, a bio-metabolite such as sugar produced by algae, etc., or a synthetic chemical such as a surfactant. Therefore, when such treatment water is subjected to membrane separation, membrane-fouling substances are adsorbed on the surface of the employed membrane, leading to problematic deterioration in membrane separation performance. However, in the present invention, since the particles of a cationic polymer which swells in water but does not substantially dissolve therein are added to treatment water before membrane separation, membrane-fouling substances are adsorbed by the particles to thereby form flocculates, and membrane separation is performed after flocculation. Therefore, treatment water containing a low-level dissolved organic substance such as a bio-metabolite serving as a membrane-fouling substance can be subjected to membrane separation, whereby adsorption of membrane-fouling substances onto the membrane is reduced, and deterioration in membrane separation performance is suppressed.

During adsorption treatment, an inorganic flocculant may be added to treatment water. Through addition of an inorganic flocculant serving as a flocculant for membrane-fouling substances, flocculates of membrane-fouling substances are formed, whereby the effect of removing membrane-fouling substances is enhanced. The inorganic flocculant may be added to the treatment water before or after the addition of the particulate cationic polymer which swells in water but does not substantially dissolve therein, so long as the addition is performed before membrane separation. Alternatively, the inorganic flocculant may be added to the treatment water simultaneously with the particulate cationic polymer which swells in water but does not substantially dissolve therein. No particular limitation is imposed on the inorganic flocculant added to treatment water, and examples of the inorganic flocculant include aluminum salts such as aluminum sulfate and polyaluminum chloride; and iron salts such as ferric chloride and ferrous sulfate. No particular limitation is imposed on the amount of inorganic flocculant added to treatment water, which may be adjusted in accordance with the quality of the treatment water. The amount is about 0.5 to about 10 mg/L as reduced to aluminum or iron with respect to the amount of treatment water. When polyaluminum chloride (PAC) is used as an inorganic flocculant, and the pH of the treatment water to which a particulate cationic polymer which swells in water but does not substantially dissolve therein and an inorganic flocculant have been added is adjusted to about 5.0 to about 7.0, flocculation is most favorably occurs.

The membrane separation method may further include deionization such as ion exchange, whereby pure water or ultra-pure water can be produced.

Before membrane separation, solid-liquid separation may be performed through precipitation or dissolved-air flotation, in order to remove, from treatment water, particles of a cationic polymer which contain a membrane-fouling substance, the particles formed through the adsorption treatment. Precipitation or dissolved-air flotation is performed after addition of the particulate cationic polymer which swells in water but does not substantially dissolve therein or the inorganic flocculant to treatment water, and the pH of the treated water is adjusted with caustic soda, slaked lime, sulfuric acid, etc. Finally, suspended matters are flocculated with an organic polymer flocculant. If required, an organic coagulant may be used in combination. No particular limitation is imposed on the organic coagulant, and examples thereof include cationic organic polymers generally employed in water treatment (membrane separation). Specific examples include polyethyleneimine, ethylenediamine-epichlorohydrin polycondensate, polyalkylene-polyamine, and polymers formed from a monomer (e.g., diallyldimethylammonium chloride or a quaternary ammonium salt of dimethylaminoethyl (meth) acrylate). No particular limitation is imposed on the amount of the organic coagulant added to treatment water, and the amount may be adjusted in accordance with the quality of the treatment water. Generally, the amount is about 0.01 to about 10 mg/L (solid content/water). No particular limitation is imposed on the type of the organic polymer flocculant, and those generally employed in water treatment may be used. Examples of the polymer flocculant include anionic organic polymer flocculants such as poly(meth)acrylic acid, (meth)acrylic acid-(meth)acrylamide copolymer, alkali metal salts thereof; nonionic organic polymer flocculants such as poly(meth)acrylamide; and cationic organic polymer flocculants such homopolymers of a cationic monomer (e.g., dimethylaminoethyl (meth)acrylate or a quaternary ammonium salt thereof, or dimethylaminopropyl (meth)acrylamide or a quaternary ammonium salt thereof), and copolymers of the cationic monomer and an nonionic monomer which can be co-polymerized therewith. No particular limitation is imposed on the amount of organic polymer flocculant added to treatment water, and the amount may be adjusted in accordance with the quality of the treatment water. Generally, the amount is about 0.01 to about 10 mg/L (solid content/water).

After adsorption treatment, the employed cationic polymer particles may be removed from the treatment water through membrane separation. For example, the cationic polymer particles may be removed from the treatment water through membrane separation by means of a micro-filtration membrane or an ultra-filtration membrane.

The thus-treated water may be further purified through decarbonation, activated-carbon-treatment, etc.

If required, additives such as a coagulant, a sterilizer, a deodorant, a defoaming agent, and an anticorrosive may be used. Also, if required, UV-radiation means, ozonization means, biological-treatment means, etc. may be employed.

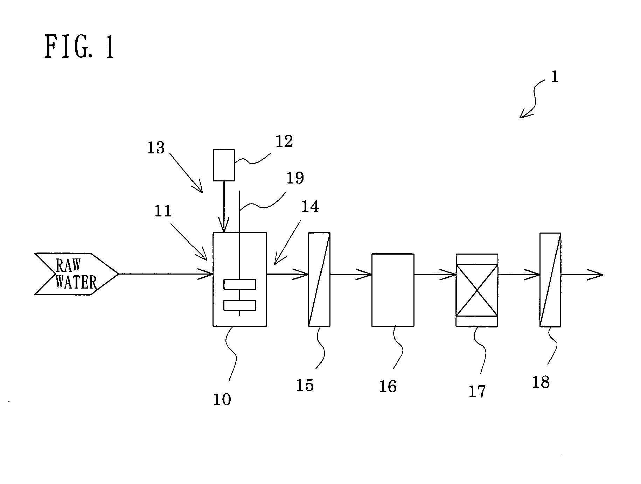

As described above, the membrane separation method of the present invention can reduce adsorption of a membrane-fouling substance contained in treatment water onto the surface of a separation membrane during membrane separation of the treatment water, to thereby suppress deterioration in membrane separation performance. FIG. 1 is a system diagram of an exemplary membrane separation apparatus employing the membrane separation method.

As shown in FIG. 1, a membrane separation apparatus 1 includes a reaction tank 10; treatment-water-introduction means 11 (e.g., a pump) for introducing treatment water (raw water); chemical-agent-introduction means 13 (particulate-polymer-introduction means) (e.g., a pump) for introducing a chemical agent from a chemical agent tank 12 in which a chemical agent such as a particulate cationic polymer which swells in water but does not substantially dissolve therein is reserved to a reaction tank 10; and a discharge means 14 for discharging the water which has undergone adsorption treatment in the reaction tank 10. On the downstream side of the reaction tank 10, membrane separation means 15, decarbonation means 16, activated carbon treatment means 17, and reverse osmosis membrane separation means 18 are sequentially disposed.

In the membrane separation apparatus 1, treatment water (raw water) such as industrial water, city water, well water, river water, lake water, and industrial wastewater is introduced to the reaction tank 10. Then, the chemical agent such as a particulate cationic polymer which swells in water but does not substantially dissolve therein which agent is stored in the chemical agent tank 12 is introduced to the reaction tank 10 through the chemical-agent-introduction means 13, whereby the agent is added to the treatment water. The water to which the chemical agent has been added is stirred by means of a stirrer 19 for adsorption treatment. The water which has undergone the adsorption treatment is discharged from the reaction tank 10 through the discharge means 14, and transferred to the membrane separation means 15 having an MF membrane for membrane separation, whereby cationic polymer particles remaining after adsorption treatment are removed from the treated water. In the present invention, membrane-fouling substances are adsorbed by the particulate cationic polymer which swells in water but does not substantially dissolve therein, and then the thus-treated water is subjected to membrane separation by means of the membrane separation means 15. Therefore, adsorption of the membrane-fouling substances onto the surface of the membrane can be reduced, and deterioration of membrane separation performance can be suppressed.

Subsequently, the water which has undergone membrane separation is transferred to the decarbonation means 16 and activated carbon treatment means 17 filled with activated carbon, disposed on the downstream side, where decarbonation and activated carbon treatment are performed. Then, the thus-treated water is transferred to the reverse osmosis membrane separation means 18 having an RO membrane, where membrane separation is performed by means of the RO membrane. The treatment water which is caused to pass the reverse osmosis membrane separation means 18 has undergone in advance adsorption of membrane-fouling substances by use of the particulate cationic polymer which swells in water but does not substantially dissolve therein, and has been subjected to membrane separation by means of the membrane separation means 15 having an MF membrane. Therefore, the treatment water is very clear, and deterioration of the RO membrane which is likely to be affected by membrane-fouling substances (e.g., bio-metabolites) can be considerably suppressed. Notably, when deionization (e.g., ion exchange) is performed before or after the membrane separation by means of the reverse osmosis membrane separation means 18, pure water or ultra-pure water can be produced. In this case, the membrane separation apparatus 1 serves as a pure-water-production apparatus or an ultra-pure-water-production apparatus.

In the embodiment of the membrane separation apparatus shown in FIG. 1, the chemical agent is introduced to the reaction tank 10. However, the chemical agent may be added to treatment water before introduction to the reaction tank 10. In the embodiment, an MF membrane is employed as the membrane separation means 15. However, a UF membrane, an RO membrane, an NF membrane, etc. may also be employed. Furthermore, in the membrane separation apparatus 1 shown in FIG. 1, the cationic polymer particles remaining after the adsorption treatment by means of the membrane separation means 15 are removed. However, the particles may be subjected to precipitation or dissolved-air flotation in the reaction tank 10, to thereby remove the particles from the treatment water.

Preferably, the separation membrane is washed with a washing liquid having a pH of about 11 to about 14, preferably 12 to 13, at an arbitrary frequency. In the present invention, membrane-fouling substances are adsorbed by the particulate cationic polymer which swells in water but does not substantially dissolve therein, and then the thus-treated water is subjected to membrane separation. Therefore, adsorption of the membrane-fouling substances contained in the treated water onto the surface of the membrane can be reduced, and deterioration of membrane separation performance can be suppressed. However, when the membrane separation is continuously performed, a solid matter which may originate from the particulate cationic polymer which swells in water but does not substantially dissolve therein becomes deposited on the membrane. Even in such a case, through washing the separation membrane with a washing liquid having a pH of about 11 to about 14, the solid matter which has been adsorbed on the separation membrane can be dissolved and removed, whereby deterioration in membrane separation performance can be more reliably suppressed. Notably, in the present invention employing a particulate cationic polymer which swells in water but does not substantially dissolve therein, when a washing liquid having a pH of about 3 to about 8, which is generally employed in, for example, reverse flow washing (i.e., reverse washing) of separation membrane, is used, the aforementioned solid matter cannot be removed sufficiently. However, as described above, the aforementioned solid matter can be removed efficiently through use of a washing liquid having a high pH of about 11 to about 14. In the case of washing the membrane with a high-pH washing liquid, the separation membrane preferably has high resistance to alkali and, for example, a PVDF (polyvinylidene fluoride) membrane is preferred.

Examples of the washing liquid having a pH of 11 to 14 include a mixture of water which has undergone membrane separation and sodium hydroxide, sodium hypochlorite, etc. Preferably, the washing liquid is a mixture of the treatment water containing an alkali in an amount of about 1 to about 2 wt.% in the case of sodium hydroxide, or about 10 to about 12 wt.% in the case of sodium hypochlorite. As to the washing method, a method generally employed washing separation membrane is applied. Specific examples of the washing method include reverse washing, flushing, and immersion washing.

No particular limitation is imposed on the frequency of washing, and the frequency be adjusted in accordance with the quality of the treatment water or the separation membrane.

In one preferred mode, membrane separation is halted after operation for 5 minutes to 3 hours (particularly preferably 10 to 60 minutes), and the membrane is subjected to reverse washing with a washing liquid having a pH of 11 to 14 for 10 to 120 seconds (particularly preferably 20 to 60 seconds). After washing of the separation membrane with a washing liquid having a pH of 11 to 14, if required, preferably, the separation membrane is further washed or rinsed with, for example, the water which has undergone the membrane separation or acid, to thereby prevent excessive elevation in pH of the treatment water at resumption of treatment.

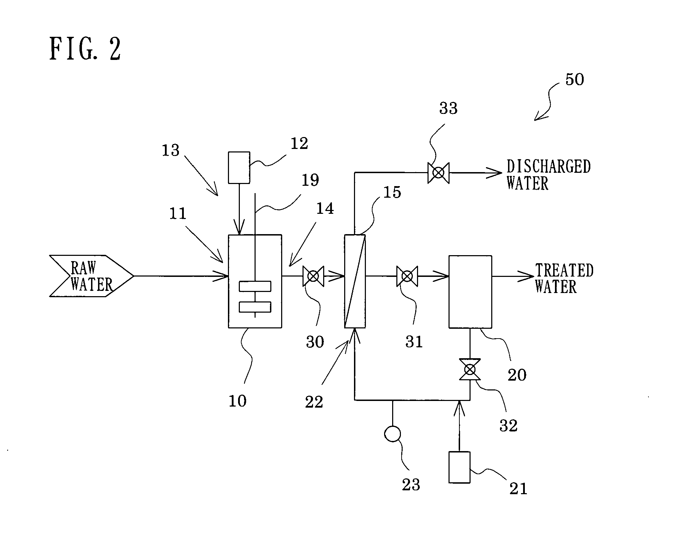

FIG. 2 is a system diagram of an exemplary membrane separation apparatus employing the membrane separation method which further includes the step of washing the separation membrane with a washing liquid having a pH of 11 to 14. Note that the same members as employed in FIG. 1 are denoted by the same reference numerals, and overlapping descriptions have been partially omitted.

As shown in FIG. 2, a membrane separation apparatus 50 includes a reaction tank 10; treatment-water-introduction means 11 (e.g., a pump) for introducing treatment water (raw water); chemical-agent-introduction means 13 (particulate-polymer-introduction means) (e.g., a pump) for introducing a chemical agent from a chemical agent tank 12 in which a chemical agent such as a particulate cationic polymer which swells in water but does not substantially dissolve therein is reserved to a reaction tank 10; and a discharge means 14 for discharging the water which has undergone adsorption treatment in the reaction tank 10. On the downstream side of the reaction tank 10, membrane separation means 15, and a treated water tank 20 for storing the water which has been subjected to membrane separation by means of the membrane separation means 15 are sequentially disposed. The membrane separation apparatus further includes washing-liquid-introduction means 22 for introducing a washing liquid to the membrane separation means 15, the washing liquid being a mixture of an alkaline liquid 21 and the water stored in the treated water tank 20, and pH measurement means 23 for measuring the pH of the washing liquid formed of a mixture of an alkaline liquid 21 and the water stored in the treated water tank 20.

In the membrane separation apparatus 50, treatment water (raw water) such as industrial water, city water, well water, river water, lake water, and industrial wastewater is introduced to the reaction tank 10. Then, the chemical agent such as an inorganic flocculant or a particulate cationic polymer which swells in water but does not substantially dissolve therein which agent is stored in the chemical agent tank 12 is introduced to the reaction tank 10 through the chemical-agent-introduction means 13, whereby the agent is added to the treatment water. The water to which the chemical agent has been added is stirred by means of a stirrer 19 for adsorption treatment. The water which has undergone the adsorption treatment is discharged from the reaction tank 10 through the discharge means 14, and transferred to the membrane separation means 15 having an MF membrane made of PVDF for membrane separation, whereby cationic polymer particles remaining after adsorption treatment are removed from the treated water. In the present invention, membrane-fouling substances are adsorbed by the particulate cationic polymer which swells in water but does not substantially dissolve therein, and then the thus-treated water is subjected to membrane separation by means of the membrane separation means 15. Therefore, adsorption of the membrane-fouling substances onto the surface of the membrane can be reduced, and deterioration of membrane separation performance can be suppressed. Subsequently, the water which has been subjected to membrane separation is stored in the treated water tank 20.

In the course of passage of membrane separation, membrane-fouling substances; i.e., solid matter and other suspended solid originating from the particles of a cationic polymer which swells in water but does not substantially dissolve therein, are gradually deposited on the separation membrane (e.g., MF membrane) of the membrane separation means 15, whereby membrane separation performance is impaired. Thus, a valve 30 disposed between the reaction tank 10 and the membrane separation means 15, and a valve 31 disposed between the membrane separation means 15 and the treated water tank 20 and being opened during membrane separation are closed at an arbitrary frequency (e.g., after operation of about 14 minutes), to thereby halt membrane separation. Then, a valve 32 connecting the treated water tank 20 and the membrane separation means 15 is opened, whereby a washing liquid formed of a mixture of treatment water stored in the treated water tank 20and alkaline liquid 21 (pH 11 to 14) is introduced to the membrane separation means 15 via the washing-liquid-introduction means 22 such as a pump. For example, through passage of the washing liquid for about one minute in the reverse direction, the separation membrane is subjected to reverse washing. The washing liquid is discharged from the membrane separation means 15 via a valve 33 to the outside of the membrane separation apparatus 50.

After washing of the separation membrane by the washing liquid (pH: 11 to 14), the valves 30, 31 are opened, and the valves 32, 33 are closed, whereby membrane separation is resumed. Thus, through washing the separation membrane, membrane-fouling substances adsorbed by the separation membrane can be removed. Therefore, deterioration membrane separation performance can be reliably prevented.

In the membrane separation apparatus shown in FIG. 2, the membrane is subjected to reverse washing with a washing liquid. However, the washing method is not limited thereto. For example, the surface of the separation membrane may be washed by means of a high-speed flow of washing liquid, to thereby remove matters deposited on the surface (i.e., flushing). In the apparatus, an MF membrane is employed as the membrane separation means 15. However, an UF membrane, an RO membrane, an NF membrane, etc. may be employed, and these membranes may be employed in combination.

The present invention will next be described in more detail by way of Examples and Comparative Examples, which should not be construed as limiting the invention thereto.

Example 1-1

Industrial water containing humus and bio-metabolites was employed as treatment water and placed into flocculation jars (1,000 mL/jar). To each jar, a particulate cationic polymer which swells in water but does not substantially dissolve therein (Accogel C, product of Mitsui Sytec Ltd.) was added at a concentration of 0.5, 1, 2, 4, or 10 mg/L (as Accogel C), and the water sample was stirred.

Subsequently, the particulate-polymer-added treatment water sample water was filtered by means of a Buchner funnel (outer diameter of perforated plate: 40 mm, height of filtration portion: 100 mm) employing a membrane filter (Millipore) (diameter: 47 mm, micropore size: 0.45 $\mu$m) such that the filtration portion on the perforated plate was continuously filled with water. The time required for recovering 500 mL of filtrate (T1 (sec)), and the time required for recovering 1,000 mL of filtrate (T2 (sec)) were measured. The MFF value of the sample at each Accogel concentration was calculated by the following formula [F1]. The lower the MFF value, the clearer the treatment water sample. The absorbance of the filtrate (treatment water) exhibiting the lowest MFF value was measured at a wavelength of 260 nm (E260: index for organic matter concentration). Table 1 shows the lowest MFF value, and E260 of a sample exhibiting the lowest MFF value. The industrial water sample (treatment water) exhibited an E260 of 0.298, and a turbidity of 22 as measured through transmitted light measurement with respect to a kaolin standard solution.

$$[F1]$$

$$MFF = (T2 - T1)/T1$$

Example 1-2

The procedure of Example 1-1 was repeated, except that Accogel C was changed to anion-exchange resin (WA20, product of Mitsubishi Chemical Co., Ltd., particulate cationic polymer which swells in water but does not substantially dissolve therein), and the anion-exchange resin concentration was adjusted to 0.5, 1, 2, 4, 10, and 20 mg/L.

Example 1-3

The procedure of Example 1-1 was repeated, except that Accogel C and polyaluminum chloride (PAC) (inorganic flocculant) were added to water samples. The PAC (10 wt.% as $Al_2O_3$) polyaluminum chloride concentration was adjusted to 0.5, 1.5, and 2.5 mg/L (as Al) in the order corresponding to the Accogel C concentration.

Comparative Example 1-1

The procedure of Example 1-1 was repeated, except that polyaluminum chloride was used instead of Accogel C.

Comparative Example 1-2

The procedure of Example 1-1 was repeated, except that Accogel C and a particulate nonionic polymer which swells in water but does not substantially dissolve therein (Accogel N, product of Mitsui Sytec Ltd.) were used.

The results are as follows. The water samples of Examples 1-1 to 1-3 and Comparative Examples 1-1 and 1-2 exhibited decreases in E260 and MFF with increased flocculant concentration, and these values reached a plateau when the concentration exceeded a certain level. Specifically, the water sample of Comparative Example 1-1, employing only an inorganic flocculant, exhibited a lowest MFF value of 1.31, while the water samples of Examples 1-1 and 1-2, employing a particulate cationic polymer which swells in water but does not substantially dissolve therein, exhibited lowest MFF values of 1.22 and 1.26, respectively. Thus, through addition of a particulate cationic polymer which swells in water but does not substantially dissolve therein, the treated water was remarkably clear as compared with the case where an inorganic flocculant was added. Therefore, when membrane separation was performed on the treatment water which had under gone a particulate cationic polymer which swells in water but does not substantially dissolve therein, clearer treated water was obtained. This indicates that fouling of the membrane was suppressed, whereby deterioration in membrane separation performance can be prevented. The water sample of Example 1-3, containing both a particulate cationic polymer which swells in water but does not substantially dissolve therein and an inorganic flocculant, exhibited an MFF value of 1.06, indicating a particularly remarkable effect. The water sample of Comparative Example 1-2, employing a particulate nonionic polymer which swells in water but does not substantially dissolve therein, exhibited a high MFF value, failing to provide clear treated water.

[Table 1]

|  | Ex. 1-1 | Ex. 1-2 | Ex. 1-3 | Comp. Ex. 1-1 | Comp. Ex. 1-2 |
|---|---|---|---|---|---|
| Lowest E260 (-) | 0.101 | 0.108 | 0.088 | 0.110 | 0.178 |
| Lowest MFF (-) | 1.22 | 1.26 | 1.06 | 1.31 | 1.41 |

Example 1-4

The same industrial water as employed in Example 1-1 was employed as treatment water and treated by means of an apparatus shown in FIG. 1. To each water sample, a particulate cationic polymer which swells in water but does not substantially dissolve therein (Accogel C, product of Mitsui Sytec Ltd.) and polyaluminum chloride (PAC) were added so as to have concentrations of 4 mg/L and 30 mg/L, respectively, followed by stirring, to thereby form a flocculate. The treatment water sample to which the particulate polymer and the inorganic flocculant had been added was subjected to solid-liquid separation by means of a 0.45-$\mu$m MF membrane (made of cellulose acetate), to thereby remove the flocculate. Thereafter, the thus-treated water was subjected to membrane separation by causing the water to pass through a reverse osmosis membrane (RO membrane). The differential pressure increase rate of the RO membrane was measured. Table 2 shows the results. The Accogel C concentration was set to 4 mg/L, when the MFF value was the lowest in Example 1-1, and the polyaluminum chloride (PAC) concentration was set to 30 mg/L, when the MFF value was the lowest in Comparative Example 1-1.

Comparative Example 1-3

The procedure of Example 1-4 was repeated, except that Accogel C was not used, and the polyaluminum chloride concentration was adjusted to 70 mg/L.
The results are as follows. The water sample of Example 1-4, employing a particulate cationic polymer which swells in water but does not substantially dissolve therein, exhibited a considerable decrease in differential pressure increase rate of the RO membrane, as compared with the water sample of Comparative Example 1-3, employing only an inorganic flocculant was employed instead of the particulate cationic polymer which swells in water but does not substantially dissolve therein. Therefore, through addition of a particulate cationic polymer which swells in water but does not substantially dissolve therein to treatment water before membrane separation by means of an RO membrane treatment, deterioration in RO membrane separation performance can be suppressed.
[Table 2]

|  | Example 1-4 | Comparative Example 1-3 |
|---|---|---|
| Differential pressure increase rate of RO membrane (kPa/Day) | 1.4 | 1.7 |

Example 1-5

The same industrial water as employed in Example 1-1 was employed as treatment water and treated by means of an apparatus shown in FIG. 2. To each water sample, a particulate cationic polymer which swells in water but does not substantially dissolve therein (Accogel C, product of Mitsui Sytec Ltd.) and polyaluminum chloride (PAC) were added so as to have concentrations of 2 ppm and 30 ppm, respectively, followed by stirring, to thereby form a flocculate. The treatment water sample to which the particulate polymer and the inorganic flocculant had been added was subjected to solid-liquid separation by means of a 0.1-$\mu$m MF membrane (made of PVDF) for 14 minutes, to thereby remove the flocculate. Thereafter, hypochlorous acid was added to the thus-treated (i.e., membrane separation with MF membrane) water to thereby prepare a washing liquid having a pH of 12. The aforementioned MF membrane was subjected to reverse washing with the washing liquid for one minute with a flow rate of 2 m/day. The steps of membrane separation and reverse washing were repeated, and the differential pressure increase of the MF membrane was measured.
The results are as follows. At the start of water passage, the differential pressure was 27 kPa. After elapse of 480 hours from the start of water passage, the differential pressure was lower than 50 kPa, and the amount of water passage did not decrease. Thus, membrane separation performance was not deteriorated. The FI value 480 hours after the water passage was found to be 2.8, and no damage to the MF membrane was observed. The FI (fouling index) value, which is defined by JIS K 3802, is an index for fouling of water in a module (mainly reverse osmosis membrane module) represented by a micro-amount of suspended solid in supplied water. In other words, the index gives the clearness of supplied water and is represented by $FI=[1-T_0/T_{15}]\times[100/15]$ ($T_0$: time (sec) required for filtering initial 500 mL of sample water by means of a membrane filter having a nominal pore size of 0.45 $\mu$m under a pressure of 206 kPa, $T_{15}$: time (sec) required for filtering subsequent 500 mL of the sample water after continuous filtration for 15 minutes (standard value) under the same conditions as employed in the period of $T_0$).

Example 1-6

The procedure of Example 1-5 was repeated, except that a washing liquid having a pH of 11 and prepared from water which has undergone membrane separation with an MF membrane and hypochlorous acid was used as a reverse washing liquid, instead of a washing liquid having a pH of 12 and prepared from water which has undergone membrane separation with an MF membrane and hypochlorous acid.

As a result, the differential pressure was 20 kPa at the start of water passage, and remains a favorable level to the point in time about 200 hours from the start of water passage. However, after the point in time 200 hours from the start of water passage, the differential pressure increased, even though reverse washing was performed. Eventually, 420 hours after, the differential pressure increased to 200 kPa.

Embodiment 2

Embodiment 2 of the membrane separation method includes adding, to treatment water (e.g., industrial water, city water, well water, river water, lake water, or industrial wastewater), a particulate cationic polymer which swells in water but does not substantially dissolve therein adsorption treatment and, subsequently, performing membrane separation, wherein the amount of the particulate cationic polymer which swells in water but does not substantially dissolve therein and which is added to the treatment water is controlled on the basis of the absorbance of the treatment water measured before the adsorption treatment.

The treatment water contains a substance which fouls the membrane employed in membrane separation (membrane-fouling substance) carried out on the downstream side, for example, a humic acid-containing organic substance, a fulvic acid-containing organic substance, a bio-metabolite such as sugar produced by algae, etc., or a synthetic chemical such as a surfactant. However, no particular limitation is imposed on the type of treatment water, and specific examples include industrial water, city water, well water, river water, lake water, and industrial wastewater (in particular, industrial wastewater which has been subjected to biological treatment).

The cationic polymer which swells in water but does not substantially dissolve therein and which forms the particles of the polymer which are added the treatment water is a copolymer of a cationic monomer having a functional group such as a primary amine group, a secondary amine group, a tertiary amine group, a group of an acid-added salt thereof, or a quaternary ammonium group, and a cross-linking agent monomer for attaining substantially no water solubility. Specific examples of the cationic monomer include an acidic salt or quaternary ammonium salt of dimethylaminoethyl (meth)acrylate, an acidic salt or quaternary ammonium salt of dimethylaminopropyl (meth)acrylamide, and diallyldimethylammonium chloride. Examples of the cross-linking agent monomer include diviyl monomers such as methylenebis(acrylamide). Alternatively, a copolymer of the aforementioned cationic monomer and an anionic or nonionic monomer which can be co-polymerized therewith may also be employed. Specific examples of the anionic monomer to be co-polymerized include (meth)acrylic acid, 2-acrylamido-2-methylpropanesulfonic acid, and an alkali metal salt thereof. The amount of the anionic monomer must be small so that the formed copolymer maintains a cationic property. Examples of the nonionic monomer include (meth)acrylamide, N-isopropylacrylamide, N-methyl(N,N-dimethyl)acrylamide, acrylonitrile, styrene, and methyl or ethyl (meth)acrylates. These monomers may be used singly or in combination of two or more species. The amount of the cross-linking agent monomer such as a divinyl monomer is required to be 0.0001 to 0.1 mol% with respect to the total amount of the monomers. Through controlling the amount, the swellability and particle size (in water) of the particles of a cationic polymer which swells in water but does not substantially dissolve therein can be controlled. Examples of the commercial product of the particulate cationic polymer which swells in water but does not substantially dissolve therein include Accogel C (product of Mitsui Sytec Ltd.). Alternatively, an anion-exchange resin such as WA20 (product of Mitsubishi Chemical Co., Ltd.) may also be used as the particulate cationic polymer which swells in water but does not substantially dissolve therein. No particular limitation is imposed on the particle size of the particles of a cationic polymer which swells in water but does not substantially dissolve therein. However, the mean particle size in reverse-phase emulsion or dispersion (suspended); i.e., the mean particle size in a non-water-swelling state, is preferably 100 $\mu$m or less, more preferably, 0.1 to 10 $\mu$m. When the particle decreases, the particles more effectively adsorb the membrane-fouling substance contained in the treated water. However, when the particle size is excessively small, solid-liquid separation is difficult to carry out.

By adding, to treatment water, particles of the particulate cationic polymer which swells in water but does not substantially dissolve therein, soluble organic substances can be adsorbed by the particles. Since the particles are insoluble in water, flocculates of the particles on which the soluble organic substances are adsorbed can be removed through membrane separation. Thus, the soluble organic substances can be readily removed from the treatment water. Therefore, as mentioned in Embodiment 1, by adding, to treatment water, particles of the particulate cationic polymer which swells in water but does not substantially dissolve therein, adsorption of a membrane-fouling substance contained in treatment water onto the surface of a separation membrane during membrane separation of the treatment water can be reduced, to thereby suppress deterioration in membrane separation performance, as compared with the case where a conventional polymer flocculant and an inorganic flocculant are employed. In addition, soluble organic substances can be removed from treatment water without using a large amount of inorganic flocculant.

No particular limitation is imposed on the method of adding to treatment water the aforementioned particulate cationic polymer which swells in water but does not substantially dissolve therein. For example, the particles as are, water dispersion thereof, or reverse-phase emulsion or dispersion (suspended) thereof may be added to treatment water. In any case, it is essential that the treatment water is subjected to adsorption treatment through addition of the particulate cationic polymer which swells in water but does not substantially dissolve therein to the treatment water; i.e., the treatment water comes into contact with the particles of a cationic polymer which swells in water but does not substantially dissolve therein, whereby soluble organic substances such as humus and bio-metabolites contained in the treatment water are adsorbed by the particles.

Two or more particulate cationic polymers which swell but do not substantially dissolve in water may also be added to the treatment water. Notably, since the cationic polymer *per se* which forms the particles swells but does not substantially dissolve in water, particles of the cationic polymer which swells in water but does not substantially dissolve therein swell but do not substantially dissolve in water, differing from a conventional polymer flocculant. The expression "not substantially dissolve in water" refers to such a water-solubility that the cationic polymer particles can be present in water. Specifically, the solubility of the particles in water at 30°C is about 0.1 g/L or less. The amount of percent swelling of the particles in water is about 10 to about 200 times, as calculated by dividing particle size in water by particle size in a non-swelling state.

Next, a reverse-phase emulsion form of the particles of cationic polymer will be described in detail. However, the particles are not limited to the form. The polymer particle emulsion is not a particular emulsion, but a conventional reverse-phase (W/O) polymer emulsion.

The reverse-phase emulsion contains the aforementioned cationic polymer, water, a liquid hydrocarbon, and a surfactant. The compositional proportions (% by mass) are as follows: cationic polymer : water : liquid hydrocarbon : surfactant = 20 to 40 : 20 to 40 : 20 to 40 : 2 to 20. Preferably, the total amount of the cationic polymer and water is adjusted to 40 to 60 mass% with respect to the total amount of the cationic polymer, water, a liquid hydrocarbon, and a surfactant.

No particular limitation is imposed on the liquid hydrocarbon, and examples of the liquid hydrocarbon include aliphatic liquid hydrocarbons such as isoparaffine (e.g., isohexane), n-hexane, kerosine, and mineral oil.

Examples of the surfactant include C10 to C20 higher aliphatic alcohol polyoxyethylene ethers and C10 to C22 higher fatty acid polyoxyethylene esters, having an HLB (hydrophilic lipophilic balance) of 7 to 10. Examples of the ethers include alcohol (lauryl alcohol, cetyl alcohol, stearyl alcohol, oleyl alcohol, etc.) polyoxyethylene (EO addition (by mole) : = 3 to 10) ethers. Examples of the esters include fatty acid (lauric acid, palmitic acid, stearic acid, oleic acid, etc.) polyoxyethylene (EO addition (by mole) = 3 to 10) esters.

No particular limitation is imposed on the method of producing the reverse-phase emulsion. The emulsion may be produced through mixing a cationic monomer (for forming the cationic polymer) and a cross-linking agent monomer with water, a liquid hydrocarbon, and a surfactant, and allowing the mixture to polymerize (via emulsion polymerization or suspension polymerization). In an alternative method, the monomers are solution-polymerized; the produced polymer is pulverized by means of a homogenizer or the like; and the polymer and a dispersant (e.g., surfactant) are added to a liquid hydrocarbon.

When the particulate cationic polymer which swells in water but does not substantially dissolve therein is added to treatment water, the particles preferably have a large surface area. Therefore, in a preferred manner, the particles in the form of reverse-phase emulsion or dispersion (suspended) are added to water under stirring, to thereby cause the particles to swell, and then the particles in the swelling state are added to the treatment water.

No particular limitation is imposed on the amount of the particulate cationic polymer which swells in water but does not substantially dissolve therein and which is added to treatment water. However, preferably, the amount is adjusted to about 1 to about 50 mass% with respect to the membrane-fouling substance contained in the treatment water.

In Embodiment 2, the amount of the particulate cationic polymer which swells in water but does not substantially dissolve therein is controlled on the basis of the absorbance of treatment water (e.g., industrial water, city water, well water, river water, lake water, or industrial wastewater). Specifically, the absorbance of the treatment water is measured before adsorption treatment, and the amount of the particulate cationic polymer which swells in water but does not substantially dissolve therein and which is added to the treatment water is controlled on the basis of the absorbance data. More specifically, the relationship between the absorbance of the treatment water and the suitable amount of the particulate cationic polymer which swells in water but does not substantially dissolve therein for treating water exhibiting the aforementioned absorbance is derived in advance. In other words, the relationship between the absorbance and the amount of the particulate cationic polymer which amount is sufficient for flocculating soluble organic substances and is not excessive is obtained, and the relationship is employed as information for controlling the amount. Then, in water treatment (membrane separation), the absorbance of treatment water is measured, and the amount of the particulate polymer added to the treatment water is controlled on the basis of the absorbance data and the information for calibrating the amount.

The absorbance values of treatment water measured at at least one wavelength falling within a UV region of 200 to 400 nm and at at least one wavelength falling within a visible-light region of 500 to 700 nm have the following correlation with the soluble organic substance concentration.

$$\text{Soluble organic substance concentration} =$$
$$A \times [(\text{absorbance in UV region}) - (\text{absorbance in visible-light}$$
$$\text{region})]$$

In addition, there is a certain correlation between the soluble organic substance concentration and the optimum amount of the particles of added to treatment water, which amount is obtained from the time required for filtering a predetermined amount of water by means of a 0.45-$\mu$m membrane filter (hereinafter referred as a KMF value). Thus, through measuring the absorbance at at least one wavelength in an UV-region and at at least one wavelength in a visible-light region, the optimum amount of the particulate cationic polymer which swells in water but does not substantially dissolve therein and which is added to water can be estimated.

Specifically, water samples having different qualities (e.g., industrial water samples sampled on different days) are subjected to a jar test in advance. From the differences between absorbance in UV region and absorbance in visible-light region, and the optimum concentration values of the particulate cationic polymer which swells in water but does not substantially dissolve therein, the relationship (information for controlling the amount of added polymer particles) represented by the below-described formula (I) is derived. In formula (I), each of A to C represents a constant depending on a quality of treatment water such as soluble organic compound concentration. E260 represents an absorbance measured at 260 nm, and E660 represents an absorbance measured at 660 nm. In water treatment, the absorbance of the treatment water is measured, and the optimum concentration of the polymer particles is determined from the absorbance data and the relationship represented by formula (I). The particles in the thus-determined optimum amount are added to the treatment water.

$$\text{(Concentration of the particulate cationic polymer}$$
$$\text{which swells in water but does not substantially dissolve}$$
$$\text{therein)}$$
$$= A \times (E260 - E660)^B + C \quad (I)$$

In the aforementioned procedure, the relationship (information for controlling the amount of added polymer particles) between the difference between absorbance in UV region and absorbance in visible-light region, and the optimum concentration value of the particulate cationic polymer which swells in water but does not substantially dissolve therein is derived. However, determination of the amount of added polymer particles is not limited to the aforementioned manner, and, for example, a threshold control method may also be employed. No particular limitation is imposed on the threshold control method. In one embodiment, when the absorbance difference is less than a specific value $a_1$, the concentration of the added particulate cationic polymer is adjusted to be; when the absorbance difference is a specific value of $a_1$ to $a_2$, the concentration of the added particulate polymer is adjusted to $b_2$; and when the absorbance difference is in excess of a specific value of $a_2$, the concentration of the added particulate polymer is adjusted to $b_3$.

Thus, through controlling the amount of the particulate cationic polymer which swells in water but does not substantially dissolve therein and which is added to treatment water on the basis of the amount of soluble organic substance contained in the treatment water, an optimum amount of the particulate cationic polymer which swells in water but does not substantially dissolve therein can be added to the treatment water, to thereby enhance treatment water efficiency. In addition, even when the quality of treatment water varies, the amount of the particulate cationic polymer which swells in water but does not substantially dissolve therein and which is added to the treatment water can be optimized in accordance with the varied quality, whereby very clear treated water can be consistently obtained. Meanwhile, Japanese Patent Application Laid-Open (*kokai*) No. 2006-272311 discloses a technique for controlling the amount of an inorganic flocculant added to treatment water on the basis of the measured absorbance data. However, according to the method disclosed in Japanese Patent Application Laid-Open (*kokai*) No. 2006-272311 including addition of an inorganic flocculant, flocculation of soluble organic substances including humus, a fulvic acid-containing organic substance, a bio-metabolite such as sugar produced by algae, etc., and a synthetic chemical such as a surfactant cannot be completed. As a result, the soluble organic substances foul a membrane, to thereby problematically reduce membrane separation flow rate. When an inorganic flocculant is added in a large amount in order to sufficiently perform flocculation of such soluble organic substances, the amount of sludge increases. Furthermore, the added inorganic flocculant fouls the membrane, to thereby increase differential pressure, which is also problematic. In contrast, the embodiment of the present invention can solve these problems.

During adsorption treatment, an inorganic flocculant may be added to treatment water. Through addition of an inorganic flocculant serving as a flocculant for soluble organic substances, flocculates of soluble organic substances are formed, whereby the effect of removing soluble organic substances is enhanced. The inorganic flocculant may be added to the treatment water before or after the addition of the particulate cationic polymer which swells in water but does not substantially dissolve therein, so long as the addition is performed before membrane separation. Alternatively, the inorganic flocculant may be added to the treatment water simultaneously with the particulate cationic polymer which swells in water but does not substantially dissolve therein. No particular limitation is imposed on the inorganic flocculant added to treatment water, and examples of the inorganic flocculant include aluminum salts such as aluminum sulfate and polyaluminum chloride; and iron salts such as ferric chloride and ferrous sulfate.

No particular limitation is imposed on the amount of inorganic flocculant added to treatment water, and the amount may be adjusted in accordance with the quality of the treatment water. The amount is about 0.5 to about 10 mg/L as reduced to aluminum or iron with respect to the amount of treatment water. Preferably, similar to the amount of particulate cationic polymer which swells in water but does not substantially dissolve therein, the amount of inorganic flocculant is controlled on the basis of the absorbance data of the treatment water obtained before the adsorption treatment.

Specifically, water samples having different qualities (e.g., industrial water samples sampled on different days) are subjected to a jar test in advance. From the differences between absorbance in UV region and absorbance in visible-light region, and the optimum concentration values of the particulate cationic polymer and the inorganic flocculant, the relationship (information for controlling the amounts of added polymer particles and inorganic flocculant) represented by the below-described formula (II) and (III) are derived. In formulas (II) and (III), each of D to I represents a constant depending on a quality of treatment water such as soluble organic compound concentration. In water treatment, the absorbance of the treatment water is measured, and the optimum concentrations of the polymer particles and inorganic flocculant are determined from the absorbance data and the relationship represented by formula (II) and (III). The particles and inorganic flocculant in the thus-determined optimum amounts are added to the treatment water.

(Concentration of the particulate cationic polymer which swells in water but does not substantially dissolve therein)

$$= D \times (E260 - E660)^E + F \quad (II)$$

(inorganic flocculant concentration)

$$= G \times (E260 - E660)^H + I \quad (III)$$

In response to the flow rate of the treatment water, the amounts of the particulate cationic polymer which swells in water but does not substantially dissolve therein and inorganic flocculant which are added to the treatment water may be modified.

In an alternative manner, after completion of adsorption treatment, the flocculate state of the treatment water before membrane separation may be evaluated. According to the flocculation state, the amounts of the particulate cationic polymer which swells in water but does not substantially dissolve therein and inorganic flocculant which are added to the treatment water may be modified. Through such controlling of the amounts, flocculation treatment can be performed in a considerably favorable manner. Notably, the flocculation state may be evaluated by means of, for example, a light-shuttering microparticle sensor or a light-scattering microparticle sensor for detecting the clearness of the treatment water containing flocculated particles (i.e., flocculate) which water has undergone adsorption treatment. In one preferred exemplary method of modifying the amounts of the particulate cationic polymer which swells in water but does not substantially dissolve therein and inorganic flocculant which are added to the treatment water according to the flocculation state, the flocculation state is evaluated by the turbidity of the water, and a certain threshold value (e.g., addition factor K when the turbidity is ≥J, or addition factor M when the turbidity is ≥L) is predetermined on the basis of the turbidity data. The threshold value is included in the information for controlling the amounts of additives represented by formulas (I) to (III).

In this way, the water which has undergone adsorption treatment with a particulate cationic polymer which swells in water but does not substantially dissolve therein is then subjected to membrane separation.

Examples of the membrane employed in the membrane separation include micro-filtration membrane (MF membrane), ultra-filtration membrane (UF membrane), nano-filtration membrane (NF membrane), and reverse osmosis membrane (RO membrane). A single type of these membranes may be used singly in a plurality of stages. Alternatively, a plurality of types of membranes may be combined. In one embodiment, treatment water is subjected to membrane separation by means of an MF membrane or UF membrane, and the thus-treated water is further subjected to membrane separation by means of an RO membrane. Generally, the treatment water (e.g., industrial water, city water, well water, or biologically treated water) contains a membrane-fouling substance such as a humic acid-containing organic substance, a fulvic acid-containing organic substance, a bio-metabolite such as sugar produced by algae, etc., or a synthetic chemical such as a surfactant. Therefore, when such treatment water is subjected to membrane separation, membrane-fouling substances are adsorbed on the surface of the employed membrane, leading to problematic deterioration in membrane separation performance. However, in the present invention, since the particles of a cationic polymer which swells in water but does not substantially dissolve therein are added to treatment water before membrane separation, membrane-fouling substances are adsorbed by the particles to thereby form flocculates, and membrane separation is performed after flocculation. Therefore, treatment water containing a low-level dissolved organic substance serving as a membrane-fouling substance can be subjected to membrane separation, whereby adsorption of membrane-fouling substances onto the membrane is reduced, and deterioration in membrane separation performance is suppressed.

Before membrane separation, precipitation, dissolved-air flotation, filtration, etc. may be carried out. Precipitation or dissolved-air flotation is performed after addition of the particulate cationic polymer which swells in water but does not substantially dissolve therein or the inorganic flocculant to treatment water, and the pH of the treated water is adjusted with caustic soda, slaked lime, sulfuric acid, etc. Finally, suspended matters are flocculated with an organic polymer flocculant. If required, an organic coagulant may be used in combination. No particular limitation is imposed on the organic coagulant, and examples thereof include cationic organic polymers generally employed in water treatment (membrane separation). Specific examples include polyethyleneimine, ethylenediamine-epichlorohydrin polycondensate, polyalkylene-polyamine, and polymers formed from a monomer (e.g., diallyldimethylammonium chloride or a quaternary ammonium salt of dimethylaminoethyl (meth)acrylate). No particular limitation is imposed on the amount of the organic coagulant added to treatment water, and the amount may be adjusted in accordance with the quality of the treatment water. Generally, the amount is about 0.01 to about 10 mg/L (solid content/water). No particular limitation is imposed on the type of the organic polymer flocculant, and those generally employed in water treatment may be used. Examples of the polymer flocculant include anionic organic polymer flocculants such as poly(meth)acrylic acid, (meth) acrylic acid-(meth)acrylamide copolymer, alkali metal salts thereof; nonionic organic polymer flocculants such as poly (meth)acrylamide; and cationic organic polymer flocculants such homopolymers of a cationic monomer (e.g., dimethylaminoethyl (meth)acrylate or a quaternary ammonium salt thereof, or dimethylaminopropyl (meth)acrylamide or a quaternary ammonium salt thereof), and copolymers of the cationic monomer and an nonionic monomer which can be co-polymerized therewith. No particular limitation is imposed on the amount of organic polymer flocculant added to treatment water, and the amount may be adjusted in accordance with the quality of the treatment water. Generally, the amount is about 1 to about 20 mg/L (solid content/water).

After adsorption treatment, the thus-treated water may be further purified through decarbonation, activated-carbon-treatment, etc. Deionization (e.g., ion exchange) may be further performed. Through such a post-treatment, pure water or ultra-pure water can be obtained.

If required, additives such as a coagulant, a sterilizer, a deodorant, a defoaming agent, and an anticorrosive may be used. Also, if required, UV-radiation means, ozonization means, biological-treatment means, etc. may be employed.

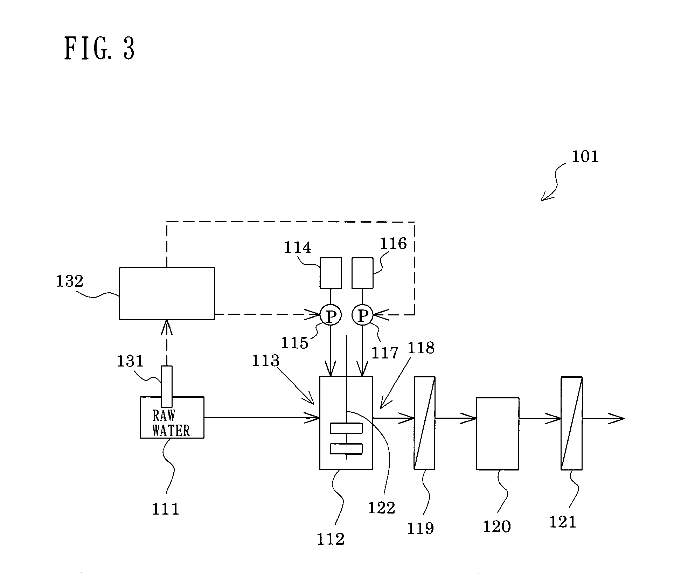

FIG. 3 is a system diagram of an exemplary membrane separation apparatus employing the membrane separation method according to the present invention. As shown in FIG. 3, a membrane separation apparatus 101 includes a raw water tank 111 for storing treatment water (e.g., industrial water, city water, well water, river water, lake water, or industrial wastewater), a reaction tank 112; treatment-water-introduction means 113 (e.g., a pump) for introducing treatment water from the raw water tank 111 to a reaction tank 112; chemical-agent-introduction means 115 (particulate-polymer-introduction means) (e.g., a pump) for introducing a chemical agent from a chemical agent tank 114 in which a chemical agent such as a particulate cationic polymer which swells in water but does not substantially dissolve therein is reserved to a reaction tank 112; inorganic-flocculant-introduction means 117 (e.g., a pump) for introducing an inorganic flocculant from an inorganic flocculant tank 116 in which an inorganic flocculant is reserved to a reaction tank 112; and a discharge means 118 for discharging the water which has undergone adsorption treatment in the reaction tank 112. On the downstream side of the reaction tank 112, membrane separation means 119, decarbonation means 120, and reverse osmosis membrane separation means 121 are sequentially disposed. The raw water tank 111 is provided with absorbance measurement means 131 for measuring the absorbance of the treatment water stored in the tank, and with addition amount control means 132. The addition amount control means 132 receives the absorbance data obtained by the absorbance measurement means 131, and calculates the amount of particulate cationic polymer which swells in water but does not substantially dissolve therein and which is introduced from the chemical agent tank 114 to the reaction tank 112, and the amount of the inorganic flocculant which is introduced from the inorganic flocculant tank 116 to the reaction tank 112. In this embodiment, the addition amount control means 132 has calibration information for controlling the amount of an additive. Specifically, each of the water samples having various absorbance values is treated in a jar tester by use of a particulate cationic polymer which swells in water but does not substantially dissolve therein and an inorganic flocculant. The relationship between the absorbance of the treatment water and the optimum amount of the particulate cationic polymer which swells in water but does not substantially dissolve therein is obtained. The thus-obtained relationship is stored as calibration information for controlling the amount of the particles. The addition amount control means 132 calculates the optimum amount of the particles from the absorbance data measured by the absorbance-measuring means 131 and the relationship (calibration information), whereby the amount of the particulate cationic polymer which is fed from the chemical-agent-introduction means 115 is controlled. Similarly, the addition amount control means 132 has calibration information for controlling the amount of the inorganic flocculant. Specifically, each of the water samples having various absorbance values is treated in a jar tester by use of a particulate cationic polymer which swells in water but does not substantially dissolve therein and an inorganic flocculant. The relationship between the absorbance of the treatment water and the optimum amount of the inorganic flocculant is obtained. The thus-obtained relationship is stored as calibration information for controlling the amount of the inorganic flocculant. The addition amount control means 132 calculates the optimum amount of the inorganic flocculant from the absorbance data measured by the absorbance-measuring means 131 and the relationship (calibration information), whereby the amount of the inorganic flocculant which is fed from the inorganic-flocculant-introduction means 117 is controlled.

In the membrane separation apparatus 101, the absorbance of the treatment water stored in the raw water tank 111 is measured by means of the absorbance measurement means 131, and the absorbance data is transferred to the addition amount control means 132. The treatment water is introduced to the reaction tank 112 via the treatment-water-introduction means 113. To the reaction tank 112 containing treatment water, a chemical agent stored in the chemical agent tank 114 (e.g., particulate cationic polymer which swells in water but does not substantially dissolve therein) and an inorganic flocculant stored in the inorganic flocculant tank 116 are introduced by means of the chemical-agent-introduction means 115 and the inorganic-flocculant-introduction means 117. Notably, the amount of the particulate cationic polymer which swells in water but does not substantially dissolve therein and which is added to water, and that of the inorganic flocculant which is added to water are calculated by the addition amount control means 132 on the basis of the absorbance data measured by the absorbance measurement means 131. The addition amount control means 132 controls the chemical-agent-introduction means 115 and the inorganic-flocculant-introduction means 117 so as to attain the calculated amounts.

Subsequently, the water to which the particulate cationic polymer which swells in water but does not substantially dissolve therein has been added is stirred by means of a stirrer 122 for adsorption treatment. The water which has undergone the adsorption treatment is discharged from the reaction tank 112 through the discharge means 118, and transferred to the membrane separation means 119 having an MF membrane for membrane separation, whereby cationic polymer particles remaining after adsorption treatment are removed from the treated water. In the present invention, membrane-fouling substances are adsorbed by the particulate cationic polymer which swells in water but does not substantially dissolve therein, and then the thus-treated water is subjected to membrane separation by means of the membrane separation means 119. Therefore, adsorption of the membrane-fouling substances onto the surface of the membrane can be reduced, and deterioration of membrane separation performance can be suppressed.

Subsequently, the water which has undergone membrane separation is transferred to the decarbonation means 120, disposed on the downstream side, where decarbonation is performed. Then, the thus-treated water is transferred to the reverse osmosis membrane separation means 121 having an RO membrane, where membrane separation is performed by means of the RO membrane. The treatment water which is caused to pass the reverse osmosis membrane separation means 121 has undergone in advance adsorption of membrane-fouling substances by use of the particulate cationic polymer which swells in water but does not substantially dissolve therein, and has been subjected to membrane separation by means of the membrane separation means 119 having an MF membrane. Therefore, the treatment water is very clear, and deterioration of the RO membrane which is likely to be affected by membrane-fouling substances (e.g., bio-metabolites) can be considerably suppressed. Notably, when deionization (e.g., ion exchange) is performed before or after the membrane separation by means of the reverse osmosis membrane separation means 121, pure water or ultra-pure water can be produced. In this case, the membrane separation apparatus 101 serves as a pure-water-production apparatus or an ultra-pure-water-production apparatus.

In the embodiment of the membrane separation apparatus shown in FIG. 3, a particulate cationic polymer which swells in water but does not substantially dissolve therein and an inorganic flocculant are introduced to the reaction tank 112. However, these chemical agents may be added to treatment water before introduction to the reaction tank 112. In the embodiment, an MF membrane is employed as the membrane separation means 119. However, a UF membrane, an RO membrane, an NF membrane, etc. may also be employed. Furthermore, in the membrane separation apparatus 1 shown in FIG. 3, the cationic polymer particles remaining after the adsorption treatment by means of the membrane separation means 119 are removed. However, the particles may be subjected to precipitation or dissolved-air flotation in the reaction tank 112, to thereby remove the particles from the treatment water. Furthermore, an additional treatment such as activated carbon treatment may be performed between the decarbonation means 120 and the reverse osmosis membrane separation means 121.

Alternatively, a sensor which can evaluate the flocculation state of treatment water in the reaction tank 112 (i.e., flocculation sensor) may be disposed in the reaction tank 112 or on the downstream side thereof, whereby the amount of the particulate cationic polymer which swells in water but does not substantially dissolve therein and that of the inorganic flocculant may be modified in accordance with the flocculation state data. In the case where mal-flocculation is observed, a certain alarm may be issued. The aforementioned addition amount control means 132 may also serve as the control means for modifying the amount of the particulate cationic polymer which swells in water but does not substantially dissolve therein and the amount of the inorganic flocculant, in accordance with the flocculation state data. Alternatively, an independent control means may be provided.

The above-recited embodiment of the present invention will next be described in more detail by way of Examples and Comparative Examples. However, these examples are not construed as limiting the invention thereto.

Example 2-1

Water for industrial use was collected in a specific period of two weeks in May, including fair and rainy days, during which the quality of the water varied. The water contained humus and bio-metabolites, and was treated with a membrane separation apparatus shown in FIG. 3. In the treatment, a particulate cationic polymer which swells in water but does not substantially dissolve therein (Accogel C, product of Mitsui Sytec Ltd.) was added to the water in an amount controlled on the basis of the absorbance data of the industrial water stored in the raw water tank 111. Table 3 shows the following data: E260 of the industrial water stored in the raw water tank 111 during the test; concentration of added Accogel C; concentration of added inorganic flocculant (PAC); KMF of the industrial water after adsorption treatment (i.e., the sum of the time required for filtering 500 mL of the sample by means of a 47-$\mu$m-diameter membrane filter at a vacuum suction pressure of 500 mmHg and the time required for filtering the subsequent 500 mL of the sample) ; and $\Delta$P (differential pressure) increase rate of the MF membrane.

The absorbance was measured by means of an S::CAN sensor (product of S::CAN, cell width: 35 mm) at 260 nm and 660 nm. The pH of the sample in the reaction tank 112 was adjusted to 6.5 by use of a pH-regulating agent. The relationship for controlling the amounts of Accogel C by means of the addition amount control means 132 in accordance with the absorbance data of the industrial water was obtained through the following procedure. Industrial water samples sampled on different days were subjected to a jar test in advance by use of Accogel C. The relationship was derived from the differences between absorbance in UV region (E260) and absorbance in visible-light region (E660), and the optimum concentration values of added Accogel C. The thus-obtained relationship is represented by the following formula (1) :

$$\text{(Concentration of added Accogel C (mg/L))}$$

$$= 25.13 \times (E260 - E660) - 1.334 \quad (1)$$

Example 2-2

The procedure of Example 2-1 was repeated, except that, in addition to Accogel C, polyaluminum chloride (PAC) serving as an inorganic flocculant was added in a constant amount of 30 mg/L. In Example 2-2 as well as the below-described Example 2-3 and 2-4 and Comparative Example 2-1 and 2-2, the same industrial water as employed in Example 2-1 was used. Thus, the tests in the Examples and Comparative Examples were carried out in parallel with that of Example 2-1.

Example 2-3

The procedure of Example 2-2 was repeated, except that the particulate cationic polymer which swells in water but does not substantially dissolve therein was added in an amount based on the formula (2), and that the inorganic flocculant was added in an amount based on the formula (3). The formulas (2) and (3) were obtained through the following procedure. Industrial water samples sampled on different days were subjected to a jar test in advance by use of Accogel C and PAC. From the differences between absorbance in UV region (E260) and absorbance in visible-light region (E660), and the optimum concentration values of added Accogel C and PAC, the relationships were derived.
$$
\text{(Concentration of added Accogel C (mg/L))}
$$

$$
= 20.14 \times (E260 - E660) - 1.06 \quad (2)
$$

$$
\text{(Concentration of added PAC (mg/L as PAC))}
$$

$$
= 121.79 \times (E260 - E660) - 3.89 \quad (3)
$$

Example 2-4

The membrane separation apparatus shown in FIG. 3 was further provided with a flocculation sensor (Kuripitari, product of Kurita Water Industries, Ltd.) in the vicinity of the outlet of the reaction tank 112. Accogel C and PAC were added to industrial water samples, and the flocculation degree of the formed flocculates in each sample was determined. The amounts of Accogel C and PAC added to each sample were controlled on the basis of formulas (2) and (3) and, in the case where the turbidity (flocculate-to-flocculate, attributed to unflocculated micro-colloid) increased to 2° or higher, were 1.5-fold increased. The other operations were the same as employed in Example 2-3.

Comparative Example 2-1

The procedure of Example 2-1 was repeated, except that PAC was used instead of Accogel C, and the amount of PAC was controlled on the basis of the formula (4).
$$
\text{(Concentration of added PAC (mg/L as PAC))}
$$

$$
= 502.6 \times (E260 - E660) - 32.7 \quad (4)
$$

Comparative Example 2-2

The procedure of Example 2-1 was repeated, except that Accogel C was added in a constant amount of 4 mg/L.
The results are as follows. In Example 2-1, ΔP increase rate of the MF membrane and KMF were lower, as compared with Comparative Examples 2-1 and 2-2, and water having high membrane-filtrability was obtained. In Comparative Example 2-1, an increased amount of PAC was used, and sludge increased. In Comparative Example 2-2, where the amounts of additives were not controlled, KFM increased in some cases.

The water samples of Example 2-2 exhibited high membrane-filtrability, as compared with Example 2-1, indicating that use of PAC in combination with Accogel C enhanced membrane-filtrability. In Example 2-3, in which the amounts of both Accogel and PAC were controlled, membrane-filtrability was further enhanced, as compared with Example 2-2. In Example 2-4, in which the amounts of Accogel and PAC were further controlled in accordance with the flocculation state, membrane-filtrability were further enhanced, as compared with Example 2-1 to 2-3.

[Table 3]

| | Ex. 2-1 | Ex. 2-2 | Ex. 2-3 | Ex. 2-4 | Comp. Ex. 2-1 | Comp. Ex. 2-2 |
|---|---|---|---|---|---|---|
| E260 of raw water (abs./50mm) | 0.073 to 0.463 | | | | | |
| Turbidity of raw water (°) | 0.7 to 25.6 | | | | | |
| PAC concentration (mg/L as PAC) | 0 | 30 | 5 to 35 | 5 to 52.5 | 40 to 200 | 0 |
| Accogel C concentration (mg/L) | 0.5 to 10.3 | 0.5 to 10.3 | 0.4 to 8.24 | 0.4 to 12.36 | 0 | 4 |
| KFM (g) | 87 to 101 | 83 to 92 | 80 to 88 | 80 to 84 | 102 to 113 | 89 to 149 |
| ΔP increase rate of MF membrane (kPa/d) | 0.31 | 0.20 | 0.15 | 0.11 | 0.38 | 0.67 |

Embodiment 3

Embodiment 3 of the membrane separation method includes a flocculating aid addition step of adding a flocculating aid to treatment water; a particulate polymer addition step of adding, to the treatment water which has undergone the flocculating aid addition step, a particulate cationic polymer which swells in water but does not substantially dissolve therein; a stirring step of stirring the treatment water which has undergone the particulate polymer addition step; and a membrane separation step of subjecting the treatment water which has undergone the stirring step to membrane separation by means of a separation membrane.

Firstly, a flocculating aid is added to treatment water (flocculating aid addition step). Examples of the treatment water include water samples containing, for example, suspended solid, a humic acid-containing organic substance, a fulvic acid-containing organic substance, a bio-metabolite such as sugar produced by algae, etc., or a synthetic chemical such as a surfactant. Specific examples include industrial water, city water, well water, river water, lake water, and industrial wastewater (in particular, industrial wastewater which has been subjected to biological treatment). Notably, the aforementioned humic acid-containing organic substance, fulvic acid-containing organic substance, bio-metabolite such as sugar produced by algae, etc., or synthetic chemical such as a surfactant fouls the membrane employed in membrane separation (membrane-fouling substance) carried out on the downstream side.

According to the present invention, water having a turbidity (suspended solid (SS) amount) of lower than 5°, for example, 0.1° or higher and lower than 5° can also be favorably treated. According to the invention, water maintaining a turbidity of lower than 5° can be favorably treated, whereby clear treated water can be obtained. In addition, water samples generally having a high turbidity such as industrial water and river water but in some cases having a turbidity of less than 5° due to variation in quality of water can be favorably treated. In the present specification, the turbidity was measured through transmitted light measurement with respect to a kaolin standard solution.

No particular limitation is imposed on the flocculating aid, so long as it can increase the turbidity of treatment water. Examples of the flocculating aid include suspended solid components such as bentonite and kaolin; and inorganic flocculants including aluminum salts such as aluminum sulfate and polyaluminum chloride; and iron salts such as ferric chloride and ferrous sulfate. Of these, inorganic flocculants are particularly preferred. Such an inorganic flocculant also plays a role of flocculant and can remove COD components and suspended solid from treatment water. The inorganic flocculant can also reduce the amount of the particulate cationic polymer which swells in water but does not substantially dissolve therein and which is added to water in a step on the downstream side. A plurality of flocculating aids may be employed.

No particular limitation is imposed on the amount of the flocculating aid added to treatment water, and the amount is preferably adjusted so that the treatment water to which the flocculating aid has been added exhibits a turbidity of 5° or higher, for example, 5° to 10°, more preferably 5° to about 7°.

After completion of the flocculating aid addition step, a particulate cationic polymer which swells in water but does not substantially dissolve therein is added (particulate polymer addition step). In this case, substances including a humic acid-containing organic substance, a fulvic acid-containing organic substance, or a bio-metabolite such as sugar produced by algae, etc., and a synthetic chemical such as a surfactant are incompletely flocculated when a conventional polymer flocculant or a conventional inorganic flocculant is used, making removal them from treatment water difficult. However, through addition of the particulate cationic polymer which swells in water but does not substantially dissolve therein (hereinafter may be referred to simply as "particulate swellable polymer"), flocculation can be favorably performed.

The cationic polymer which swells in water but does not substantially dissolve therein and which forms the particles of the polymer which are added the treatment water is a copolymer of a cationic monomer having a functional group such as a primary amine group, a secondary amine group, a tertiary amine group, a group of an acid-added salt thereof, or a quaternary ammonium group, and a cross-linking agent monomer for attaining substantially no water solubility. Specific examples of the cationic monomer include an acidic salt or quaternary ammonium salt of dimethylaminoethyl (meth)acrylate, an acidic salt or quaternary ammonium salt of dimethylaminopropyl (meth)acrylamide, and diallyldimethylammonium chloride. Examples of the cross-linking agent monomer include diviyl monomers such as methylenebis(acrylamide). Alternatively, a copolymer of the aforementioned cationic monomer and an anionic or nonionic monomer which can be co-polymerized therewith may also be employed. Specific examples of the anionic monomer to be co-polymerized include (meth)acrylic acid, 2-acrylamido-2-methylpropanesulfonic acid, and an alkali metal salt thereof. The amount of the anionic monomer must be small so that the formed copolymer maintains a cationic property. Examples of the nonionic monomer include (meth)acrylamide, N-isopropylacrylamide, N-methyl(N,N-dimethyl)acrylamide, acrylonitrile, styrene, and methyl or ethyl (meth)acrylates. These monomers may be used singly or in combination of two or more species. The amount of the cross-linking agent monomer such as a divinyl monomer is required to be 0.0001 to 0.1 mol% with respect to the total amount of the monomers. Through controlling the amount, the swellability and particle size (in water) of the particles of the swellable polymer can be controlled. Examples of the commercial product of the particulate swellable polymer Accogel C (product of Mitsui Sytec Ltd.). Alternatively, an anion-exchange resin such as WA20 (product of Mitsubishi Chemical Co., Ltd.) may also be used as the particulate swellable polymer. No particular limitation is imposed on the particle size of the particles of the swellable polymer. However, the mean particle size in reverse-phase emulsion or dispersion (suspended); i.e., the mean particle size in a non-water-swelling state, is preferably 100 μm or less, more preferably, 0.1 to 10 μm. When the particle decreases, the particles more effectively adsorb suspended solid and the like contained in the treated water. However, when the particle size is excessively small, solid-liquid separation is difficult to carry out.

By adding, to treatment water, particles of the particulate cationic polymer which swells in water but does not substantially dissolve therein, as mentioned in Embodiment 1, adsorption of a membrane-fouling substance contained in treatment water onto the surface of a separation membrane during membrane separation of the treatment water can be reduced, to thereby suppress deterioration in membrane separation performance, as compared with the case where a conventional polymer flocculant and an inorganic flocculant are employed.

No particular limitation is imposed on the method of adding to treatment water the aforementioned particulate cationic polymer which swells in water but does not substantially dissolve therein. For example, the particles as are, water dispersion thereof, or reverse-phase emulsion or dispersion (suspended) thereof may be added to treatment water. In any case, it is essential that the treatment water comes into contact with the particles of the swellable polymer added to the treatment water, and suspended solid and the like contained in the water which has been subjected to a subsequent stirring step are adsorbed by the particles of the swellable polymer, to thereby cause flocculation.

Two or more swellable polymers may also be added to the treatment water. Notably, since the cationic polymer *per se* which forms the particulate swellable polymer swells in water but does not substantially dissolve therein, particles of the swellable polymer swell in water but do not substantially dissolve therein, differing from a conventional polymer flocculant. The expression "not substantially dissolve in water" refers to such a water-solubility that the cationic polymer particles can be present in water. Specifically, the solubility of the particles in water at 30°C is about 0.1 g/L or less. The amount of percent swelling of the particles in water is about 10 to about 200 times, as calculated by dividing particle size in water by particle size in a non-swelling state.

Next, a reverse-phase emulsion form of the particles of cationic polymer will be described in detail. However, the particles are not limited to the form. The polymer particle emulsion is not a particular emulsion, but a conventional reverse-phase (W/O) polymer emulsion.

The reverse-phase emulsion contains the aforementioned cationic polymer, water, a liquid hydrocarbon, and a surfactant. The compositional proportions (% by mass) are as follows: cationic polymer : water : liquid hydrocarbon : surfactant = 20 to 40 : 20 to 40 : 20 to 40 : 2 to 20. Preferably, the total amount of the cationic polymer and water is adjusted to 40 to 60 mass% with respect to the total amount of the cationic polymer, water, a liquid hydrocarbon, and a surfactant.

No particular limitation is imposed on the liquid hydrocarbon, and examples of the liquid hydrocarbon include aliphatic liquid hydrocarbons such as isoparaffine (e.g., isohexane), n-hexane, kerosine, and mineral oil.

Examples of the surfactant include C10 to C20 higher aliphatic alcohol polyoxyethylene ethers and C10 to C22 higher fatty acid polyoxyethylene esters, having an HLB (hydrophilic lipophilic balance) of 7 to 10. Examples of the ethers include alcohol (lauryl alcohol, cetyl alcohol, stearyl alcohol, oleyl alcohol, etc.) polyoxyethylene (EO addition (by mole) : = 3 to 10) ethers. Examples of the esters include fatty acid (lauric acid, palmitic acid, stearic acid, oleic acid, etc.) polyoxyethylene (EO addition (by mole) = 3 to 10) esters.

No particular limitation is imposed on the method of producing the reverse-phase emulsion. The emulsion may be produced through mixing a cationic monomer (for forming the cationic polymer) and a cross-linking agent monomer with water, a liquid hydrocarbon, and a surfactant, and allowing the mixture to polymerize (via emulsion polymerization or suspension polymerization). In an alternative method, the monomers are solution-polymerized; the produced polymer is pulverized by means of a homogenizer or the like; and the polymer and a dispersant (e.g., surfactant) are added to a liquid hydrocarbon.

When the particulate swellable polymer is added to treatment water, the particles preferably have a large surface area. Therefore, in a preferred manner, the particles in the form of reverse-phase emulsion or dispersion (suspended) are added to water under stirring, to thereby cause the particles to swell, and then the particles in the swelling state are added to the treatment water.

No particular limitation is imposed on the amount of the particulate swellable polymer which is added to treatment water. However, preferably, the amount is adjusted to about 1 to about 50 mass% with respect to the membrane-fouling substance contained in the treatment water.

Additionally, a step of adding an inorganic flocculant to treatment water may be performed simultaneously with the particulate polymer addition step or after the particulate polymer addition step. Through addition of an inorganic flocculant serving as a flocculant for suspended solid, flocculation of suspended solid is promoted, whereby the effect of removing suspended solid is enhanced. In the case where the step of adding an inorganic flocculant to treatment water is performed simultaneously with the particulate polymer addition step or after the particulate polymer addition step, a flocculating aid other than the inorganic flocculant is preferably added in the flocculating aid addition step before the particulate polymer addition step. No particular limitation is imposed on the inorganic flocculant added to treatment water, and examples of the inorganic flocculant include aluminum salts such as aluminum sulfate and polyaluminum chloride; and iron salts such as ferric chloride and ferrous sulfate. No particular limitation is imposed on the amount of inorganic flocculant added to treatment water, which may be adjusted in accordance with the quality of the treatment water. The amount is about 0.5 to about 10 mg/L as reduced to aluminum or iron with respect to the amount of treatment water. When polyaluminum chloride (PAC) is used as an inorganic flocculant, and the pH of the treatment water to which a particulate swellable polymer and an inorganic flocculant have been added is adjusted to about 5.0 to about 7.0, flocculation most favorably occurs.

After completion of the particulate polymer addition step, the treated water is stirred (stirring step). Through the stirring step, suspended solid and the like are completely adsorbed by particles of the swellable polymer, to thereby flocculate suspended solid and the like. In the case where the flocculating aid addition step is not performed before the particulate polymer addition step, when the treatment water has low turbidity, swellable polymer particles which have not adsorbed suspended solid are deposited in the water treatment system; i.e., on the inner wall of the flocculation tank (to which swellable polymer particles are added) or the inner wall of a precipitation tank disposed on the downstream side, to thereby foul the inside of the system, leading to incomplete flocculation of suspended solid. When flocculation of suspended solid is incomplete, clear treated water cannot be obtained, or the membrane employed in the subsequent membrane separation is fouled, which is problematic. The mechanism of incomplete flocculation of suspended solid has not been elucidated in detail, but the conceivable mechanism is as follows. That is, in the case where the flocculating aid addition step is not performed, when the treatment water has low turbidity, swellable polymer particles which have not adsorbed suspended solid are present. These polymer particles are deposited in the water treatment system; i.e., on the inner wall of the flocculation tank or the inner wall of the precipitation tank. Once the swellable polymer is deposited on the inner wall or the like, the swellable polymer is further deposited on the deposited polymer particles. As a result, the amount of swellable polymer which can adsorb suspended solid becomes insufficient, leading to incomplete flocculation of suspended solid.

According to the present invention, the flocculating aid addition step is performed before the particulate polymer addition step, fouling of the inner wall of the flocculation tank or the like and insufficient flocculation can be suppressed.

After completion of the stirring step, the treated water is subjected to membrane separation (membrane separation step). No particular limitation is imposed on the membrane separation means, so long as it can remove, from treatment water, flocculates of suspended solid, etc. generated in the stirring step. Examples of the membrane employed in the membrane separation include micro-filtration membrane (MF membrane), ultra-filtration membrane (UF membrane), nano-filtration membrane (NF membrane), and reverse osmosis membrane (RO membrane). A single type of these membranes may be used singly in a plurality of stages. Alternatively, a plurality of types of membranes may be combined. In one embodiment, treatment water is subjected to membrane separation by means of an MF membrane or UF membrane, and the thus-treated water is further subjected to membrane separation by means of an RO membrane. In membrane separation, the treatment water (e.g., industrial water, city water, well water, or biologically treated water) generally contains a membrane-fouling substance such as a humic acid-containing organic substance, a fulvic acid-containing organic substance, a bio-metabolite such as sugar produced by algae, etc., or a synthetic chemical such as a surfactant. Therefore, when such treatment water is subjected to membrane separation, membrane-fouling substances are adsorbed on the surface of the employed membrane, leading to problematic deterioration in membrane separation performance. However, in the present invention, since the particles of a swellable polymer are added to treatment water before membrane separation, membrane-fouling substances are adsorbed by the particles to thereby form flocculates, and membrane separation is performed after flocculation. Therefore, treatment water containing a low-level dissolved organic substance such as a bio-metabolite serving as a membrane-fouling substance can be subjected to membrane separation, whereby adsorption of membrane-fouling substances onto the membrane is reduced, and deterioration in membrane separation performance is suppressed. Thus, clear treated water can be consistently obtained.

Before membrane separation, precipitation, dissolved-air flotation, filtration, etc. may be carried out. In precipitation or dissolved-air flotation, preferably, the pH of the treated water is adjusted with caustic soda, slaked lime, sulfuric acid, etc., and finally, suspended matters are flocculated with an organic polymer flocculant. If required, an organic coagulant may be used in combination. No particular limitation is imposed on the organic coagulant, and examples thereof include cationic organic polymers generally employed in water treatment (membrane separation). Specific examples include polyethyleneimine, ethylenediamine-epichlorohydrin polycondensate, polyalkylene-polyamine, and polymers formed from a monomer (e.g., diallyldimethylammonium chloride or a quaternary ammonium salt of dimethylaminoethyl (meth)acrylate). No particular limitation is imposed on the amount of the organic coagulant added to treatment water, and the amount may be adjusted in accordance with the quality of the treatment water. Generally, the amount is about 0.01 to about 10 mg/L (solid content/water). No particular limitation is imposed on the type of the organic polymer flocculant, and those generally employed in water treatment may be used. Examples of the polymer flocculant include anionic organic polymer flocculants such as poly(meth)acrylic acid, (meth)acrylic acid-(meth)acrylamide copolymer, alkali metal salts thereof; nonionic organic polymer flocculants such as poly(meth)acrylamide; and cationic organic polymer flocculants such homopolymers of a cationic monomer (e.g., dimethylaminoethyl (meth)acrylate or a quaternary ammonium salt thereof, or dimethylaminopropyl (meth)acrylamide or a quaternary ammonium salt thereof), and copolymers of the cationic monomer and an nonionic monomer which can be co-polymerized therewith. No particular limitation is imposed on the amount of organic polymer flocculant added to treatment water, and the amount may be adjusted in accordance with the quality of the treatment water. Generally, the amount is about 0.01 to about 10 mg/L (solid content/water).

After membrane separation, deionization (e.g., ion exchange) may be further performed, whereby pure water or ultra-pure water can be obtained. Also, further purification such as decarbonation or activated-carbon-treatment may be performed.

If required, additives such as a coagulant, a sterilizer, a deodorant, a defoaming agent, and an anticorrosive may be used. Also, if required, UV-radiation means, ozonization means, biological-treatment means, etc. may be employed.

As described hereinabove, in the membrane separation method according to the present invention, a flocculating aid is added to treatment water, followed by further adding a particulate cationic polymer which swells in water but does not substantially dissolve therein, and the thus-treated water is subjected to membrane separation. Therefore, treatment water having low turbidity can be treated, and clear treated water can be obtained without fouling, for example, the inner wall of the flocculation tank.

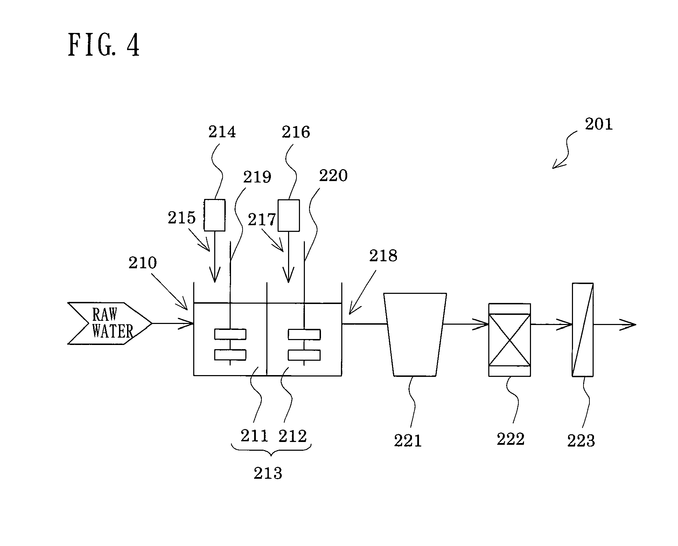

FIG. 4 is a system diagram of an exemplary membrane separation apparatus employing the membrane separation method according to the present invention. As shown in FIG. 4, a membrane separation apparatus 201 includes treatment-water-introduction means 210 (e.g., a pump) for introducing treatment water (raw water); a flocculation tank 213 consisting of a first flocculation tank 211 and a second flocculation tank 212 arranged in the water passage direction; flocculating-aid-introduction means 215 (e.g., a pump) for introducing a flocculating aid stored in a flocculating aid tank 214 into the first flocculation tank 211; particulate-swellable-polymer-introduction means 217 (e.g., a pump) for introducing a particulate swellable polymer stored in a particulate swellable polymer tank 216 to the second flocculation tank 212; and discharge means 218 for discharging the treated water which has undergone flocculation of suspended solid in the flocculation tank 213. The flocculation tank 213 is provided with a stirrer 219 for stirring treatment water in the first flocculation tank 211, and with a stirrer 220 for stirring treatment water in the second flocculation tank 212. On the downstream side of the flocculation tank 213, dissolved-air flotation means 221, sand filtration means 222, and membrane separation means 223 having an MF membrane are disposed in the direction of water passage.

In the membrane separation apparatus 201, treatment water (raw water) (e.g., industrial water, city water, well water, river water, lake water, or industrial waste water) is introduced to the first flocculation tank 211. Then, the flocculating aid stored in the flocculating aid tank 214 is introduced to treatment water in the first flocculation tank 211 via the flocculating-aid-introduction means 215, and the treatment water is stirred by means of the stirrer 219. Then, the thus-treated water is introduced to the second flocculation tank 212. The particulate swellable polymer stored in the particulate swellable polymer tank 216 is introduced to the water in the second flocculation tank 212 via the particulate-swellable-polymer-introduction means 217, and the water is stirred by means of the stirrer 220. Through this procedure, suspended solid and membrane-fouling substances contained in the treatment water are flocculated through adsorption by the swellable polymer particles. The thus-treated water in which flocculates have been formed is then discharged by means of the discharge means 218 from the flocculation tank 213, and is subjected to membrane separation by means of the dissolved-air flotation means 221, sand filtration means 222, and membrane separation means 223 having an MF membrane, to thereby remove the flocculates, whereby clear treated water is obtained.

In this embodiment, since the particulate swellable polymer is added after addition of the flocculating aid, fouling in the system of the membrane separation apparatus 201 (e.g., inner wall of the second flocculation tank 212) can be suppressed. In addition, flocculation of suspended solid can be sufficiently performed, whereby clear treated water can be obtained. In the membrane separation apparatus shown in FIG. 4, membrane-fouling substances are flocculated by use of a particulate swellable polymer, followed by performing membrane separation. Therefore, adsorption of membrane-fouling substances onto the surface of the membrane is reduced, and deterioration in membrane separation performance is suppressed, whereby clear treated water can be consistently obtained.

Notably, in the membrane separation apparatus shown in FIG. 4, a dual-tank structure consisting of the first flocculation tank 211 and the second flocculation tank 212 was employed. However, alternatively, at least one tank may be substituted by a pipe where stirring can be performed. In the apparatus, an MF membrane is employed as the membrane separation means 223. However, a UF membrane, RO membrane, NF membrane, etc. may also alternatively be employed.

The above-recited embodiment of the present invention will next be described in more detail by way of Examples and Comparative Examples. However, these examples are not construed as limiting the invention thereto.

Example 3-1

Industrial water containing humus and bio-metabolites was employed as treatment water (raw water). The samples thereof had a turbidity (as measured through transmitted light measurement with respect to a kaolin standard solution) of 1.2 to 4.8°, and an absorbance measured at 260 nm (E260: index for organic matter concentration) of 0.187 to 0.345 was treated for one month by means of the membrane separation apparatus shown in FIG. 4, the membrane separation apparatus including a flocculation tank, dissolved-air flotation means, sand filtration means, and membrane separation means having an MF membrane (0.45 $\mu$m, made of cellulose acetate). Kaolin (300 mesh (100%), product of Kishida Chemical Co., Ltd.) was added to the first flocculation tank, and a particulate swellable polymer (Accogel C, product of Mitsui Sytec Ltd.) was added to the second flocculation tank. The amount of kaolin added to the first flocculation tank was adjusted such that the treatment water had a suspended solid amount of 5°, while the amount of Accogel C added to the second flocculation tank was adjusted to 4 mg/L with respect to the treatment water.

In the course of the water treatment for one month, the TOC concentration and turbidity of each water sample which had undergone sand filtration were determined. The MFF value of the water sample which had undergone treatment with an MF membrane was also determined. The results are shown in Table 4. TOC concentration was determined through wet-format oxide infrared absorption, and turbidity was determined through transmitted light measurement with respect to a kaolin standard solution. MFF value was determined through the following procedure. Specifically, each water sample was filtered by means of a Buchner funnel (outer diameter of perforated plate: 40 mm, height of filtration portion: 100 mm) employing a membrane filter (Millipore) (diameter: 47 mm, micropore size: 0.45 $\mu$m) such that the filtration portion on the perforated plate was continuously filled with water. The time required for recovering 500 mL of filtrate (T1 (sec)), and the time required for recovering 1,000 mL of filtrate (T2 (sec)) were measured. The MFF value of the sample was calculated by the following formula. The lower the MFF value, the clearer the treatment water sample. And the inner wall of the membrane separation apparatus after one month treatment was visually observed.

[F2]

$$MFF = (T2 - T1) / T1$$

Example 3-2

The procedure of Example 3-1 was repeated, except that polyaluminum chloride (PAC) for industrial use was employed instead of kaolin, and that PAC was added to the first flocculation tank in an amount of 30 mg/L with respect to the treatment water.

Comparative Example 3-1

The procedure of Example 3-1 was repeated, except that kaolin was not added.

The results are as follows. In Examples 3-1 and Example 3-2, no deposition of swellable polymer particles was observed inside the membrane separation apparatus (e.g., on the inner wall of the second flocculation tank). That is, the second flocculation tank was not fouled.

In Examples 3-1 and 3-2, the TOC concentration and turbidity of each water sample which had undergone sand filtration were maintained at low levels, confirming that suspended solid was consistently and reliably flocculated by swellable polymer particles.

In addition, in Examples 3-1 and 3-2, the MFF value of each water sample which had undergone treatment with an MF membrane was maintained at a low level, confirming that clear treated water was consistently obtained. Notably, no fouling was observed on the MF membrane even after water passage for one month.

In contrast, in Comparative Example 3-1, in which no flocculating aid was added before addition of the particulate swellable polymer, particles of the swellable polymer were deposited in the inner wall of the second flocculation tank. The TOC concentration and turbidity of each water sample which had undergone sand filtration, and the MFF value of each water sample which had undergone treatment with an MF membrane were elevated in some cases, as compared with Examples 3-1 and 3-2. Thus, due to deposition of particles of the swellable polymer on the inner wall of the flocculation tank, flocculation of suspended solid was insufficient in some cases, whereby clear treated water was not able to be obtained consistently after treatment with an MF membrane. Furthermore, the MF membrane was fouled.

[Table 4]

|  | Ex. 3-1 | Ex. 3-2 | Comp. Ex. 3-1 |
|---|---|---|---|
| E260 of raw water (abs./50mm) | 0.187 to 0.345 | | |
| Turbidity of raw water (°) | 1.2 to 4.8 | | |
| Fouling of 2nd flocculation tank | no | no | yes |
| TOC (mg/L) of treatment water after sand filtration | 0.55 to 071 | 0.49 to 0.58 | 0.56 to 0.88 |
| Turbidity (0) of treatment water after sand filtration | 0.01 to 0.13 | 0.01 to 0.09 | 0.01 to 1.89 |
| MFF value (-) of treateement water after MF membrane treatment | 1.08 to 1.23 | 1.09 to 1.19 | 1.13 to 1.77 |

Embodiment 4

In embodiment 4, the membrane separation method according to the present invention comprises a particulate polymer addition step of adding to treatment water a particulate cationic polymer which swells in water but does not substantially dissolve therein; a stirring step of stirring for 10 seconds or shorter the treatment water which has undergone the particulate polymer addition step; and a membrane separation step of subjecting the treatment water which has undergone the stirring step to membrane separation by means of a separation membrane.

Firstly, a particulate cationic polymer which swells in water but does not substantially dissolve therein is added to treatment water (particulate polymer addition step).

Examples of the treatment water include water samples containing, for example, suspended solid, a humic acid-containing organic substance, a fulvic acid-containing organic substance, a bio-metabolite such as sugar produced by algae, etc., or a synthetic chemical such as a surfactant. Specific examples include industrial water, city water, well water, river water, lake water, and industrial wastewater (in particular, industrial wastewater which has been subjected to biological treatment). Notably, the aforementioned humic acid-containing organic substance, fulvic acid-containing organic substance, bio-metabolite such as sugar produced by algae, etc., or synthetic chemical such as a surfactant fouls the membrane employed in membrane separation (membrane-fouling substance) carried out on the downstream side. Substances including a humic acid-containing organic substance, a fulvic acid-containing organic substance, or a bio-metabolite such as sugar produced by algae, etc., and a synthetic chemical such as a surfactant are incompletely flocculated when a conventional polymer flocculant or a conventional inorganic flocculant is used, making removal them from treatment water difficult. However, according to the present invention, through addition of the particulate cationic polymer which swells in water but does not substantially dissolve therein (hereinafter may be referred to simply as "particulate swellable polymer"), flocculation can be favorably performed.

According to the present invention, even when water having a turbidity (suspended solid (SS) amount) of 0.1 to 30° is treated, clear treated water having a turbidity, for example, 0.0 to 1.0° is produced. In the present specification, the turbidity was measured through transmitted light measurement with respect to a kaolin standard solution.

The cationic polymer which swells in water but does not substantially dissolve therein and which forms the particles of the polymer which are added the treatment water is a copolymer of a cationic monomer having a functional group such as a primary amine group, a secondary amine group, a tertiary amine group, a group of an acid-added salt thereof, or a quaternary ammonium group, and a cross-linking agent monomer for attaining substantially no water solubility. Specific examples of the cationic monomer include an acidic salt or quaternary ammonium salt of dimethylaminoethyl (meth)acrylate, an acidic salt or quaternary ammonium salt of dimethylaminopropyl (meth)acrylamide, and diallyldimethylammonium chloride. Examples of the cross-linking agent monomer include diviyl monomers such as methylenebis(acrylamide). Alternatively, a copolymer of the aforementioned cationic monomer and an anionic or nonionic monomer which can be co-polymerized therewith may also be employed. Specific examples of the anionic monomer to be co-polymerized include (meth)acrylic acid, 2-acrylamido-2-methylpropanesulfonic acid, and an alkali metal salt thereof. The amount of the anionic monomer must be small so that the formed copolymer maintains a cationic property. Examples of the nonionic monomer include (meth)acrylamide, N-isopropylacrylamide, N-methyl(N,N-dimethyl)acrylamide, acrylonitrile, styrene, and methyl or ethyl (meth)acrylates. These monomers may be used singly or in combination of two or more species. The amount of the cross-linking agent monomer such as a divinyl monomer is required to be 0.0001 to 0.1 mol% with respect to the total amount of the monomers. Through controlling the amount, the swellability and particle size (in water) of the particles of the swellable polymer can be controlled. Examples of the commercial product of the particulate swellable polymer include Accogel C (product of Mitsui Sytec Ltd.). Alternatively, an anion-exchange resin such as WA20 (product of Mitsubishi Chemical Co., Ltd.) may also be used as the particulate swellable polymer. No particular limitation is imposed on the particle size of the particles of the swellable polymer. However, the mean particle size in reverse-phase emulsion or dispersion (suspended); i.e., the mean particle size in a non-water-swelling state, is preferably 100 $\mu$m or less, more preferably, 0.1 to 10 $\mu$m. When the particle size decreases, the particles more effectively adsorb suspended solid and the like contained in the treated water. However, when the particle size is excessively small, solid-liquid separation is difficult to carry out.

Thus, as mentioned in Embodiment 1, by adding, to treatment water, particles of the particulate cationic polymer which swells in water but does not substantially dissolve therein, adsorption of a membrane-fouling substance contained in treatment water onto the surface of a separation membrane during membrane separation of the treatment water can be reduced, to thereby suppress deterioration in membrane separation performance, as compared with the case where a conventional polymer flocculant and an inorganic flocculant are employed.

No particular limitation is imposed on the method of adding to treatment water the aforementioned particulate cationic polymer which swells in water but does not substantially dissolve therein. For example, the particles as are, water dispersion thereof, or reverse-phase emulsion or dispersion (suspended) thereof may be added to treatment water. In any case, it is essential that the treatment water is subjected to adsorption treatment through addition of the particulate swellable polymer to the treatment water; i.e., the treatment water comes into contact with the particles of the swellable polymer and undergoes a subsequent stirring step, whereby the solid suspended and the like contained in the treatment water is adsorbed by the particles of the swellable polymer.

Two or more particulate swellable polymers may also be added to the treatment water. Notably, since the cationic polymer *per se* which forms the particles swells but does not substantially dissolve in water, particles of the cationic polymer which swells in water but does not substantially dissolve therein swell but do not substantially dissolve in water, differing from a conventional polymer flocculant. The expression "not substantially dissolve in water" refers to such a water-solubility that the cationic polymer particles can be present in water. Specifically, the solubility of the particles in water at 30°C is about 0.1 g/L or less. The amount of percent swelling of the particles in water is about 10 to about 200 times, as calculated by dividing particle size in water by particle size in a non-swelling state.

Next, a reverse-phase emulsion form of the particles of cationic polymer will be described in detail. However, the particles are not limited to the form. The polymer particle emulsion is not a particular emulsion, but a conventional reverse-phase (W/O) polymer emulsion.

The reverse-phase emulsion contains the aforementioned cationic polymer, water, a liquid hydrocarbon, and a surfactant. The compositional proportions (% by mass) are as follows: cationic polymer : water : liquid hydrocarbon : surfactant = 20 to 40 : 20 to 40 : 20 to 40 : 2 to 20. Preferably, the total amount of the cationic polymer and water is adjusted to 40 to 60 mass% with respect to the total amount of the cationic polymer, water, a liquid hydrocarbon, and a surfactant.

No particular limitation is imposed on the liquid hydrocarbon, and examples of the liquid hydrocarbon include aliphatic liquid hydrocarbons such as isoparaffine (e.g., isohexane), n-hexane, kerosine, and mineral oil.

Examples of the surfactant include C10 to C20 higher aliphatic alcohol polyoxyethylene ethers and C10 to C22 higher fatty acid polyoxyethylene esters, having an HLB (hydrophilic lipophilic balance) of 7 to 10. Examples of the ethers include alcohol (lauryl alcohol, cetyl alcohol, stearyl alcohol, oleyl alcohol, etc.) polyoxyethylene (EO addition (by mole) :

= 3 to 10) ethers. Examples of the esters include fatty acid (lauric acid, palmitic acid, stearic acid, oleic acid, etc.) polyoxyethylene (EO addition (by mole) = 3 to 10) esters.

No particular limitation is imposed on the method of producing the reverse-phase emulsion. The emulsion may be produced through mixing a cationic monomer (for forming the cationic polymer) and a cross-linking agent monomer with water, a liquid hydrocarbon, and a surfactant, and allowing the mixture to polymerize (via emulsion polymerization or suspension polymerization). In an alternative method, the monomers are solution-polymerized; the produced polymer is pulverized by means of a homogenizer or the like; and the polymer and a dispersant (e.g., surfactant) are added to a liquid hydrocarbon.

When the particulate swellable polymer is added to treatment water, the particles preferably have a large surface area. Therefore, in a preferred manner, the particles in the form of reverse-phase emulsion or dispersion (suspended) are added to water under stirring, to thereby cause the particles to swell, and then the particles in the swelling state are added to the treatment water.

No particular limitation is imposed on the amount of the particulate swellable polymer which is added to treatment water. However, preferably, the amount is adjusted to about 1 to about 50 mass% with respect to the membrane-fouling substance contained in the treatment water.

Additionally, a step of adding an inorganic flocculant to treatment water (inorganic flocculant addition step) may be performed simultaneously with the particulate polymer addition step or after the particulate polymer addition step. Through addition of an inorganic flocculant serving as a flocculant for suspended solid or the like, flocculation of suspended solid or the like is promoted, whereby the effect of removing suspended solid or the like is enhanced.

No particular limitation is imposed on the inorganic flocculant added to treatment water in the aforementioned steps, and examples of the inorganic flocculant include aluminum salts such as aluminum sulfate and polyaluminum chloride; and iron salts such as ferric chloride and ferrous sulfate. No particular limitation is imposed on the amount of inorganic flocculant added to treatment water, which may be adjusted in accordance with the quality of the treatment water. The amount is about 0.5 to about 10 mg/L as reduced to aluminum or iron with respect to the amount of treatment water. When polyaluminum chloride (PAC) is used as an inorganic flocculant, and the pH of the treatment water to which a particulate swellable polymer and an inorganic flocculant have been added is adjusted to about 5.0 to about 7.0, flocculation is most favorably occurs.

After completion of the particulate polymer addition step, the thus-treated water is stirred (stirring step), whereby suspended solid and the like are completely adsorbed by particles of the swellable polymer, forming flocculates of the suspended solid and the like. According to the membrane separation method of the present invention, stirring time is 10 seconds or shorter. No particular limitation is imposed on the lower limit of the stirring time, so long as the target flocculant can be formed. The stirring time is, for example, 0.1 to 10 seconds, preferably 1 to 5 seconds.

In the present invention, sufficient flocculation can be attained through stirring for a period of time of 10 seconds or shorter, to thereby form coarse and solid flocculates, possibly because the particulate cationic polymer which swells in water but does not substantially dissolve therein and which is added in the particulate polymer addition step rapidly adsorb suspended solid and membrane-fouling substances so as to rapidly form flocculates. Therefore, in the subsequent membrane separation step, breakthrough of flocculates is prevented, and suspended solid, membrane-fouling substances, etc. can be removed as flocculates. Thus, clear treated water (e.g., low-turbidity water) can be obtained.

As described above, since the stirring time is as short as 10 seconds, even when a line mixer (pipe mixer) is employed as a stirrer, the installation area thereof is comparatively small, whereby a small-scale membrane separation apparatus can be realized. According to a method including adding to treatment water an inorganic flocculant and a polymer flocculant; stirring the treatment water so as to adsorb suspended solid or the like contained therein onto the inorganic flocculant or the like, to thereby form flocculates of the suspended solid or the like; and subsequently performing membrane separation, such flocculates must be coarse and solid in order to produce clear treated water. In addition, coarseness and solidness of a flocculate are greatly affected by the stirring time and intensity after addition of an inorganic flocculant and the like. For example, when the stirring time is short, flocculation of the suspended solid and the like is insufficient, failing to form coarse flocculates. In addition, due to poor solidness, the formed flocculates cannot be captured in the subsequent solid-liquid separation step. Therefore, the treated water is not clear due to remaining suspended solid and the like therein, and the membrane is problematically fouled. For example, when treatment water contains a membrane-fouling substance such as a humic acid-containing organic substance, a fulvic acid-containing organic substance, or a bio-metabolite such as sugar produced by algae, etc., or a synthetic chemical such as a surfactant, sufficient flocculation is not attained, leading to fouling of the membrane, which is considerably problematic. Therefore, for producing clear treated water, stirring is generally performed such that a GT value of 300,000 or higher is attained by stirring for about 5 to about 15 minutes. In the case where a line mixer is employed for stirring, long-time stirring requires installation of a long line mixer, which makes the installation area problematically large. In contrast, according to the present invention, sufficient flocculation can be attained by a stirring time of 10 seconds or shorter, to thereby form coarse and solid flocculates. Therefore, even when a line mixer or a similar mixer is employed, a small-scale water treatment apparatus can be realized.

In addition to the aforementioned line mixer, examples of the stirrer include a vortex pump. There are employed some conventional membrane separation methods employing a line mixer, when the stirring time is short, clear treated water having a turbidity of, for example, 0.0 to 1.0° cannot be obtained. That is, clearness of the treated water and short time stirring are not simultaneously satisfied.

The parameter "GT value," which is an index for stirring intensity in the stirring step, is preferably 100,000 to 300,000. The GT value is defined by the following.

GT value: product of G value and T value
G value: a square root of (percent energy consumption of stirrer blades $\varepsilon_0$ (erg/cm$^3$ ·sec))/(viscosity of water $\mu$)
unit: $S^{-1}$ (1/sec) (i.e., $(\varepsilon_0/\mu)^{1/2}$)
T value: stirring time (sec)

In the case where an inorganic flocculant addition step is performed before or after the particulate polymer addition step, a stirring step may be performed thereafter. The stirring step performed after the inorganic flocculant addition step may be the same as described above.

After completion of the stirring step, the treated water is subjected to membrane separation (membrane separation step). No particular limitation is imposed on the membrane separation means, so long as it can remove, from treatment water, flocculates of suspended solid, etc. generated in the stirring step. Examples of the membrane employed in the membrane separation include micro-filtration membrane (MF membrane), ultra-filtration membrane (UF membrane), nano-filtration membrane (NF membrane), and reverse osmosis membrane (RO membrane). A single type of these membranes may be used singly in a plurality of stages. Alternatively, a plurality of types of membranes may be combined. In one embodiment, treatment water is subjected to membrane separation by means of an MF membrane or UF membrane, and the thus-treated water is further subjected to membrane separation by means of an RO membrane. In membrane separation, the treatment water (e.g., industrial water, city water, well water, or biologically treated water) generally contains a membrane-fouling substance such as a humic acid-containing organic substance, a fulvic acid-containing organic substance, a bio-metabolite such as sugar produced by algae, etc., or a synthetic chemical such as a surfactant. Therefore, when such treatment water is subjected to membrane separation, membrane-fouling substances are adsorbed on the surface of the employed membrane, leading to problematic deterioration in membrane separation performance. However, in the present invention, since the particles of a swellable polymer are added to treatment water before membrane separation, membrane-fouling substances are adsorbed by the particles to thereby form flocculates, and membrane separation is performed after flocculation. Therefore, treatment water containing a low-level dissolved organic substance such as a bio-metabolite serving as a membrane-fouling substance can be subjected to membrane separation, whereby adsorption of membrane-fouling substances onto the membrane is reduced, and deterioration in membrane separation performance is suppressed. Thus, clear treated water can be consistently obtained.

Before or after membrane separation, precipitation, dissolved-air flotation, filtration, etc. may be carried out. In precipitation or dissolved-air flotation, preferably, the pH of the treated water is adjusted with caustic soda, slaked lime, sulfuric acid, etc., after addition of an inorganic flocculant and the like, and finally, suspended matters are flocculated with an organic polymer flocculant. If required, an organic coagulant may be used in combination. No particular limitation is imposed on the organic coagulant, and examples thereof include cationic organic polymers generally employed in water treatment (membrane separation). Specific examples include polyethyleneimine, ethylenediamine-epichlorohydrin polycondensate, polyalkylene-polyamine, and polymers formed from a monomer (e.g., diallyldimethylammonium chloride or a quaternary ammonium salt of dimethylaminoethyl (meth)acrylate). No particular limitation is imposed on the amount of the organic coagulant added to treatment water, and the amount may be adjusted in accordance with the quality of the treatment water. Generally, the amount is about 0.01 to about 10 mg/L (solid content/water). No particular limitation is imposed on the type of the organic polymer flocculant, and those generally employed in water treatment may be used. Examples of the polymer flocculant include anionic organic polymer flocculants such as poly(meth)acrylic acid, (meth)acrylic acid-(meth)acrylamide copolymer, alkali metal salts thereof; nonionic organic polymer flocculants such as poly(meth)acrylamide; and cationic organic polymer flocculants such homopolymers of a cationic monomer (e.g., dimethylaminoethyl (meth)acrylate or a quaternary ammonium salt thereof, or dimethylaminopropyl (meth)acrylamide or a quaternary ammonium salt thereof), and copolymers of the cationic monomer and an nonionic monomer which can be co-polymerized therewith. No particular limitation is imposed on the amount of organic polymer flocculant added to treatment water, and the amount may be adjusted in accordance with the quality of the treatment water. Generally, the amount is about 0.01 to about 10 mg/L (solid content/water).

After membrane separation, deionization (e.g., ion exchange) may be further performed, whereby pure water or ultra-pure water can be obtained. Also, further purification such as decarbonation or activated-carbon-treatment may be performed.

If required, additives such as a coagulant, a sterilizer, a deodorant, a defoaming agent, and an anticorrosive may be used. Also, if required, UV-radiation means, ozonization means, biological-treatment means, etc. may be employed.

As described above, through employment of the membrane separation method of the invention, suspended solid and the like can be sufficiently flocculated, although stirring is performed for 10 seconds or shorter in flocculation treatment of treatment water at a low GT value of, for example, about 100,000 to 300,000. Therefore, clear treated water containing small amounts of suspended solid and the like can be obtained through solid-liquid separation. In addition, by virtue of a short stirring time, even when a line mixer is employed as a stirrer, the installation area is comparatively small, whereby a small-scale membrane separation apparatus can be attained. Furthermore, since membrane-fouling substances can be sufficiently flocculated, deterioration in separation performance of the membrane employed in membrane separation (solid-liquid separation) can be suppressed, whereby clear treated water can be obtained consistently.

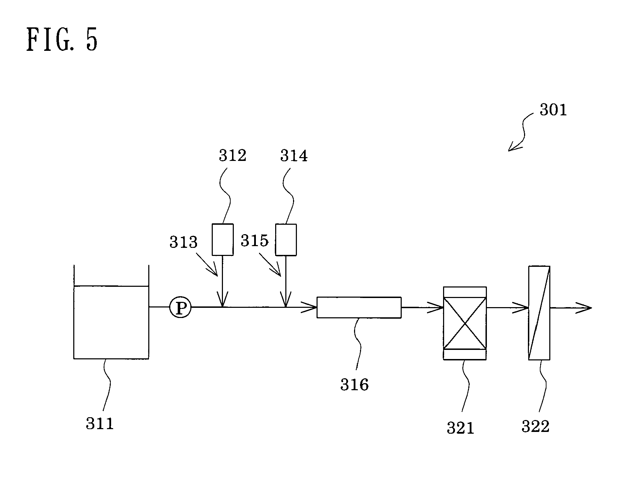

FIG. 5 is a system diagram of an exemplary membrane separation apparatus employing the membrane separation method according to the present invention. As shown in FIG. 5, a membrane separation apparatus 301 includes raw water tank 311 for storing (raw water); a pump for feeding the treatment water; inorganic-flocculant-introduction means 313 (e.g., a pump) for introducing an inorganic flocculant stored in an inorganic flocculant tank 312; particulate-swellable-polymer-introduction means 315 (e.g., a pump) for introducing a particulate swellable polymer stored in a particulate swellable polymer tank 314 to the treatment water; and a line mixer 316 for stirring the water to which the inorganic flocculant and the particulate swellable polymer has been added, to thereby flocculate suspended solid and the like. In the downstream side of the line mixer 316, sand filtration means 321 and membrane separation means 322 having an MF membrane are sequentially disposed in the direction of water passage. The raw water tank 311, the line mixer 316, the sand filtration apparatus 321, and the membrane separation means 322 are sequentially connected by means of pipes, and the line mixer 316 includes a pipe having the same diameter as that of the pipe for introducing treatment water, and stirring blades disposed in the pipe of the line mixer 316.

In the membrane separation apparatus 301, treatment water (raw water) (e.g., industrial water, city water, well water, river water, lake water, or industrial waste water) is introduced to the raw tank 311. Then, the treatment water stored in the raw water tank 311 is fed to the line mixer 316 by means of a pump. Into the pipe through which the water fed to the line mixer 316 passes, the inorganic flocculant stored in the inorganic flocculant tank 312 is injected by means of the inorganic-flocculant-introduction means 313, whereby the flocculant is added to the treatment water. Subsequently, into the pipe through which the water fed to the line mixer 316 passes, the particulate swellable polymer stored in the particulate swellable polymer tank 314 is injected by means of the particulate-swellable-polymer-introduction means 315, whereby the polymer particles are added to the treatment water. Then, the water to which the inorganic flocculant and the particulate swellable polymer have been added is stirred by means of the line mixer 316 for about 0.1 to about 10 seconds. Through this procedure, suspended solid and membrane-fouling substances contained in the treatment water are flocculated through adsorption by the swellable polymer particles and the inorganic flocculant.

The thus-treated water in which flocculates have been formed is then subjected to membrane separation by means of the sand filtration means 321, and membrane separation means 322 having an MF membrane, to thereby remove the flocculates, whereby clear treated water is obtained.

In this embodiment, suspended solid and the like can be sufficiently flocculated, although stirring is performed for 10 seconds or shorter in flocculation treatment of treatment water. Therefore, clear treated water containing small amounts of suspended solid and the like can be obtained through solid-liquid separation. In addition, by virtue of a short stirring time, the short-line line mixer 316 can be employed as a stirrer, whereby the dimensions of the membrane separation apparatus 301 can be reduced. Furthermore, since membrane-fouling substances can be sufficiently flocculated, deterioration in separation performance of the MF membrane can be suppressed, whereby clear treated water can be obtained consistently.

In the membrane separation apparatus shown in FIG. 5, inorganic-flocculant-introduction means 313 was disposed on the upstream side of the particulate-swellable-polymer-introduction means 315. However, the inorganic-flocculant-introduction means 313 is not necessarily provided, or the inorganic-flocculant-introduction means 313 may be disposed on the downstream side of the particulate-swellable-polymer-introduction means 315. Alternatively, the particulate-swellable-polymer-introduction means 315 may also serve as the inorganic-flocculant-introduction means 313.

In this embodiment, the line mixer 316 was employed as a stirrer, but another stirrer such as a vortex pump may also be employed. Furthermore, an MF membrane was employed as the membrane separation means 322. However, a UF membrane, RO membrane, NF membrane, etc. may also alternatively employed.

The above-recited embodiment of the present invention will next be described in more detail by way of Examples and Comparative Examples. However, these examples are not construed as limiting the invention thereto.

Example 4-1

Industrial water containing humus and bio-metabolites was employed as treatment water (raw water). The samples thereof had a turbidity (as measured through transmitted light measurement with respect to a kaolin standard solution) of 0.8 to 10.8°, and an absorbance measured at 260 nm (E260: index for organic matter concentration) of 0.157 to 0.300 was treated for 19 days by means of the membrane separation apparatus shown in FIG. 5, the membrane separation apparatus including a raw water tank, a line mixer, sand filtration means, and membrane separation means having an MF membrane (0.45 $\mu$m, made of cellulose acetate). To the pipe disposed on the upstream side of the line mixer, polyaluminum chloride (PAC) and a particulate swellable polymer (Accogel C, product of Mitsui Sytec Ltd.) were sequentially introduced. The amount of added PAC was adjusted to 30 mg/L with respect to each treatment water sample, and the amount of added Accogel C was adjusted to 4 mg/L with respect to each treatment water sample. Each treatment water sample was stirred by means of the line mixer for 4 seconds at a GT value of 200,000.

In the course of the water treatment for 19 days, the TOC concentration and turbidity of each water sample which had undergone sand filtration were determined. The MFF value of the water sample which had undergone treatment with an MF membrane was also determined. The results are shown in Table 5. TOC concentration was determined through wet-format oxide infrared absorption, and turbidity was determined through transmitted light measurement with respect to a kaolin standard solution. MFF value was determined through the following procedure. Specifically, each water sample was filtered by means of a Buchner funnel (outer diameter of perforated plate: 40 mm, height of filtration portion: 100 mm) employing a membrane filter (Millipore) (diameter: 47 mm, micropore size: 0.45 $\mu$m) such that the filtration portion on the perforated plate was continuously filled with water. The time required for recovering 500 mL of filtrate (T1 (sec)), and the time required for recovering 1,000 mL of filtrate (T2 (sec)) were measured. The MFF value of the sample was calculated by the following formula. The lower the MFF value, the clearer the treatment water sample.

$$[\mathrm{F3}]$$

$$\mathrm{MFF=(T2-T1)/T1}$$

Example 4-2

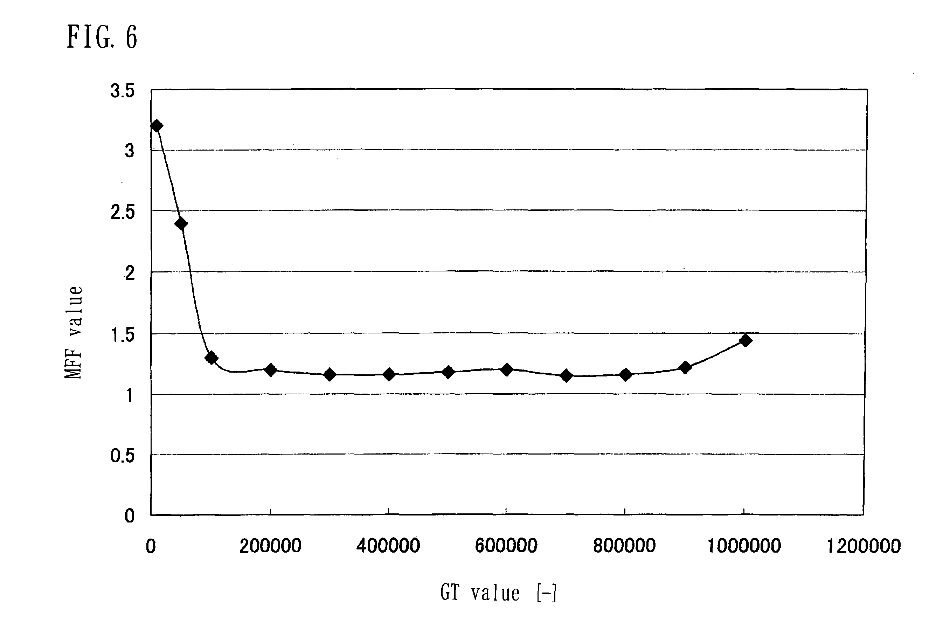

The procedure of Example 4-1 was repeated, except that the GT value of the stirrer was modified to 10,000 to 1,000,000. In Example 4-2, the G value was constantly set to 20,000, while the stirring time was varied. FIG. 6 is a graph showing the plots of mean MFF values versus GT values.

Comparative Example 4-1

The procedure of Example 4-1 was repeated, except that Accogel C was not added.

Comparative Example 4-2

The procedure of Example 4-1 was repeated, except that a membrane separation apparatus including a flocculation tank equipped with a stirrer was employed instead of the line mixer. In Comparative Example 4-2, the treatment water was stirred in the flocculation tank for 800 seconds at a GT value of 800,000. Due to the disposed flocculation tank, the installation area of the membrane separation apparatus was doubled or more.

The results are as follows. In Example 4-1, the TOC concentration and turbidity of each water sample which had undergone sand filtration were maintained at low levels, confirming that suspended solid was consistently and reliably flocculated by swellable polymer particles.

In addition, in Example 4-1, the MFF value of each water sample which had undergone treatment with an MF membrane was maintained at a low level, confirming that clear treated water was consistently obtained. Notably, no fouling was observed on the MF membrane even after water passage for 19 days.

In Example 4-1, the treated water was found to have a TOC concentration, turbidity, and MFF value which are almost equivalent to those obtained in Comparative Example 4-2, employing a longer stirring time and a higher GT value. Therefore, in Example 4-1, suspended solid and the like were found to be sufficiently flocculated even by a short stirring time. The phenomenon is supported by the graph in FIG. 6.

In contrast, Comparative Example 4-1, in which no particulate swellable polymer was added, the TOC concentration and turbidity of the water samples after sand filtration were considerably high as compared with Example 4-1, and the MFF value of the water samples which had undergone the treatment with an MF membrane was in some cases higher as compared with Example 4-1. Therefore, when no particulate swellable polymer was added to water, flocculation of suspended solid and the like through stirring for 4 seconds at a GT value of 200,000 was insufficient, confirming that, clear treated water cannot be obtained consistently after the MF membrane treatment. In addition, the MF membrane was fouled.

[Table 5]

|  | Ex. 4-1 | Comp. Ex. 4-1 | Comp. Ex. 4-2 |
|---|---|---|---|
| E260 of raw water (abs./50mm) | 0.157 to 0.300 | | |
| Turbidity of raw water (°) | 0.8 to 10.8 | | |
| TOC of water after sand filtration (mg/L) | 0.45 to 0.75 | 0.88 to 2.77 | 0.55 to 0.73 |
| Turbidity of water after sand filtration (°) | 0.01 to 0.16 | 1.09 to 3.77 | 0.01 to 0.19 |
| MFF value (-) of water after MF membrane treatment | 1.13 to 1.17 | 1.24 to 1.88 | 1.12 to 1.16 |

**Claims**

1. A membrane separation method, **characterized by** comprising adding, to treatment water, a particulate cationic polymer which swells in water but does not substantially dissolve therein; performing adsorption treatment; and subjecting the treatment water which has undergone the adsorption treatment to membrane separation by means of a separation membrane.

2. A membrane separation method according to claim 1, wherein, in the adsorption treatment, an inorganic flocculant is added to the treatment water.

3. A membrane separation method according to claim 1 or 2, wherein the membrane separation includes at least a separation treatment by means of a micro-filtration membrane or an ultra-filtration membrane, and the particulate cationic polymer is removed from the treatment water through the membrane separation after the adsorption treatment.

4. A membrane separation method according to any of claims 1 to 3, wherein the membrane separation includes separation treatment by means of at least one stage of a reverse osmosis membrane.

5. A membrane separation method according to any of claims 1 to 4, wherein, after the adsorption treatment, the treatment water is subjected to deionization, to thereby produce pure water.

6. A membrane separation method according to any of claims 1 to 5, wherein the separation membrane is washed with a washing liquid having a pH of 11 to 14 at an arbitrary frequency.

7. A membrane separation method according to claim 6, wherein the washing with the washing liquid is reverse washing.

8. A membrane separation method according to any of claims 1 to 7, wherein the amount of the particulate cationic polymer added to the treatment water is controlled on the basis of the absorbance of the treatment water measured before the adsorption treatment.

9. A membrane separation method according to claim 8, wherein the absorbance is measured at at least one wavelength falling within a UV region of 200 to 400 nm and at at least one wavelength falling within a visible-light region of 500 to 700 nm.

10. A membrane separation method according to any of claims 1 to 9, wherein the treatment water is humus-containing water.

11. A membrane separation method, **characterized by** comprising a flocculating aid addition step of adding a flocculating aid to treatment water; a particulate polymer addition step of adding, to the treatment water which has undergone the flocculating aid addition step, a particulate cationic polymer which swells in water but does not substantially dissolve therein; a stirring step of stirring the treatment water which has undergone the particulate polymer addition step; and a membrane separation step of subjecting the treatment water which has undergone the stirring step to membrane separation by means of a separation membrane.

**12.** A membrane separation method according to claim 11, wherein the treatment water has a turbidity of less than 5° before addition of the flocculating aid.

**13.** A membrane separation method according to claim 11 or 12, wherein the flocculating aid is an inorganic flocculant.

**14.** A membrane separation method, **characterized by** comprising a particulate polymer addition step of adding to treatment water a particulate cationic polymer which swells in water but does not substantially dissolve therein; a stirring step of stirring for 10 seconds or shorter the treatment water which has undergone the particulate polymer addition step; and a membrane separation step of subjecting the treatment water which has undergone the stirring step to membrane separation by means of a separation membrane.

**15.** A membrane separation method according to claim 14, wherein, before addition of the particulate cationic polymer which swells in water but does not substantially dissolve therein, the treatment water has a turbidity of 0.1 to 30°, and the treatment water which has undergone the membrane separation has a turbidity of 0.0 to 1.0°.

**16.** A membrane separation method according to claim 14 or 15, wherein the stirring step is performed at a GT value of 100,000 to 300,000.

**17.** A membrane separation method according to any of claims 14 to 16, which includes, before the particulate polymer addition step, an inorganic flocculant addition step of adding an inorganic flocculant to the treatment water.

**18.** A membrane separation apparatus **characterized by** comprising a reaction tank, treatment-water-introduction means for introducing treatment water to the reaction tank; particulate-polymer-introduction means for introducing a particulate cationic polymer which swells in water but does not substantially dissolve therein to the treatment water in the reaction tank or on the upstream side of the reaction tank; discharge means for discharging the treatment water which has undergone the adsorption treatment in the reaction tank; and membrane separation means for subjecting the treatment water which has been discharged through the discharge means to membrane separation by means of a separation membrane.

**19.** A membrane separation apparatus according to claim 18, which further includes deionization means for deionizing treatment water disposed on the downstream side of the reaction tank, to thereby serve as a pure-water production apparatus, wherein the membrane separation means includes at least one stage of a reverse osmosis membrane.

**20.** A membrane separation apparatus according to claim 18 or 19, which further includes washing-liquid-introduction means for introducing a washing liquid having a pH of 11 to 14 to the membrane separation means.

**21.** A membrane separation apparatus according to any of claims 18 to 20, which further includes absorbance-measuring means for measuring the absorbance of the treatment water, the means being disposed on the upstream side of the particulate-polymer-introduction means, and amount control means for controlling the amount of the particulate polymer added to the treatment water on the basis of the absorbance measured by means of the absorbance-measuring means.

FIG. 1

# FIG. 2

FIG. 3

# FIG. 4

FIG. 5

FIG. 6

EP 2 177 479 A1

**INTERNATIONAL SEARCH REPORT**

| International application No. |
|---|
| PCT/JP2008/064137 |

**A. CLASSIFICATION OF SUBJECT MATTER**
*C02F1/44*(2006.01)i, *B01D61/02*(2006.01)i, *B01D61/16*(2006.01)i, *B01D61/58*(2006.01)i, *C02F1/28*(2006.01)i, *C02F1/42*(2006.01)i, *C02F1/52*(2006.01)i, *C02F9/00*(2006.01)i

According to International Patent Classification (IPC) or to both national classification and IPC

**B. FIELDS SEARCHED**

Minimum documentation searched (classification system followed by classification symbols)
C02F1/44, B01D61/02, B01D61/16, B01D61/58, C02F1/28, C02F1/42, C02F1/52, C02F9/00

Documentation searched other than minimum documentation to the extent that such documents are included in the fields searched
Jitsuyo Shinan Koho 1922-1996 Jitsuyo Shinan Toroku Koho 1996-2008
Kokai Jitsuyo Shinan Koho 1971-2008 Toroku Jitsuyo Shinan Koho 1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 1-176409 A (Henkel KGaA), 12 July, 1989 (12.07.89), Claims 1, 18; page 5, lower right column; page 12, upper left column & EP 273335 A2 & DE 3644579 A & FI 875698 A & DK 686587 A & ZA 8709675 A & DK 686587 A0 | 1-21 |
| A | JP 2000-500387 A (Cytec Technology Corp.), 18 January, 2000 (18.01.00), Claim 1; page 30, line 24 to page 31, line 2 & WO 1997/018167 A1 | 1-21 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 October, 2008 (10.10.08) | 21 October, 2008 (21.10.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2008/064137 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 4-130121 A  (Director General, Agency of Industrial Science and Technology), 01 May, 1992 (01.05.92), Full text (Family: none) | 1-21 |
| A | JP 2007-23146 A  (Hymo Corp.), 01 February, 2007 (01.02.07), Claim 1; Par. Nos. [0002], [0003] (Family: none) | 1-21 |
| A | JP 64-85199 A  (Mitsui Saianamitsudo Kabushiki Kaisha), 30 March, 1989 (30.03.89), Claims 1, 4; page 3, lower left column, lines 11 to 19 (Family: none) | 1-21 |
| A | JP 4-118006 A  (Atochem), 20 April, 1992 (20.04.92), Full text; all drawings & EP 432018 A1         & FR 2655277 A & FR 2655567 A         & NO 905208 A & PT 96092 A            & AU 6777890 A & FI 906025 A           & CA 2031618 A & IE 904387 A           & NO 905208 A0 | 1-21 |

Form PCT/ISA/210 (continuation of second sheet) (April 2007)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11077062 A

- JP 2006272311 A